# EUROPEAN PATENT APPLICATION

(11) **EP 4 772 358 A1**
(43) Date of publication of application: **08.07.2026**
(21) Application number: 26157991.6
(22) Date of filing: 23.02.2023
(51) Int. Cl.: B42D 25/324, B42D 25/373, B42D 25/36, G03C 1/815, G07D 7/12, G02B 1/00, G02B 5/00, G02B 5/20, G07D 7/04, G02B 5/18

(54) **DEVICES, METHODS AND A VISUAL DISPLAY INVOLVING METAMATERIAL FILTERS**

(30) Priority: 18.03.2022 US 202263321458 P
(62) Divisional of application: 23708426.4
(71) Applicant: Authentix, Inc., Addison, TX 75001 (US)
(72) Inventor: KHOSHNEGAR SHAHRESTANI, Milad, Boxboroug, 01719 (US); YANG, Ruifeng, Boxborough, 01719 (US); BEALES, Graham, F, Boxborough, 01719 (US)
(74) Representative: Paulraj, Leonita Theresa

(57) **Abstract**

Devices configured to emit colored light when illuminated with ultraviolet light and color-shifting displays containing the same are disclosed.

## Description

### CROSS-REFERENCE TO RELATED APPLICATIONS

This application claims the benefit of priority to U.S. Application No. 63/321,458, filed on March 18, 2022, the contents of which are hereby incorporated by reference.

### FIELD OF THE DISCLOSURE

The present disclosure is in the fields of optical security features and metamaterials. More particularly, the disclosure relates to metasurface displays for use in producing optical security features and for the production of optically variable authentication security features

### BACKGROUND OF THE INVENTION

Interactive anti-counterfeiting features known as optically variable devices (OVD) enable angle-dependent optical effects which are employed for user authentication purposes. In the category of overt security features, color-shifting security features produced by multi-layer filters composed of stacked optical thin films with alternating refractive indices offer angle-dependent color alteration using Fabry-Perot resonances. In practice, realizing a user-engaging color shift effect by exploiting dielectric thin films may be accomplished by stacking several layers of high and low refractive index materials with limited feasibility for volume production and in roll-to-roll platforms, which are widely used in the OVD industry.

A more advanced family of anti-counterfeiting features employs the multi-layer stack of thin films in combination with fluorescing material in the form of a device-assisted security feature, where the fluorescing material is illuminated by a designated excitation device (a widely used example of this is ultraviolet (UV) light) radiating at least two emission wavelengths. The filtering function of the thin film stack selects a wavelength within a certain range of viewing angles while suppressing the other fluorescence wavelengths, inducing a color shift effect when the user navigates through different viewing angles (see for example US9170417B2).

Although roll-to-roll printing of a fluorescing material, such as UV ink, is a well-established process at industrial scale, vacuum deposition of thin film stacks with alternating refractive indices remains an obstacle to producing such device-assisted security features at volume.

Thus, what is needed are improved deposition methods of thin film stacks for producing such device-assisted security features at volume.

### SUMMARY OF THE INVENTION

It has been discovered that combining a dielectric layer with a periodic array of nanostructures and a coating layer results in a metastructure optical filter that can be used for filtering light. By adjusting parameters of the periodic array, such as sizes of the nanostructures, periodicity of the nanostructures, and shapes of the nanostructures, the metastructure optical filter can be configured to filter the visible light.

This discovery has been exploited to develop the present disclosure, which, in part, is directed to a device, a structure, or a display configured to emit a color in a visible range.

The present disclosure describes metasurface optical filters for selecting a wavelength (or a range of wavelengths) within a certain range of viewing angles while suppressing other wavelengths and optionally inducing a color shift effect when the user navigates through different viewing angles.

In one aspect, the present disclosure is directed to a device configured to emit a color in a visible range. The device includes a first dielectric layer having a periodic array of nanostructures on a first side, and a coating layer disposed on the periodic array. The coating layer is formed from a metallic or dielectric material, and the combination of the coating layer and the periodic array forms an optical filter configured to transmit UV light and block visible light at a wavelength range. Further, the device includes a fluorescent layer disposed on or in proximity to the coating layer. The fluorescent layer comprises a plurality of fluorescent compounds dispersed therethrough. When the fluorescent layer is illuminated by UV light, the fluorescent compounds are configured to emit visible light, which is filtered by the optical filter to produce the color.

Examples can include one or more of the following features.

In an example, the device further includes an adhesive layer disposed on the florescent layer.

In an example, the device further includes a substrate disposed on the adhesive layer.

In an example, the device further includes a protective layer disposed on a second side of the first dielectric layer, the second side being opposite to the first side, wherein the protective layer absorbs minimal visible light and is configured to protect the device from mechanical and chemical damage.

In an example, the periodic array has a periodicity of about 120 nm to about 700 nm; and/or up to 400 columns and up to 400 rows.

In an example, each nanostructure has a height of about 50 nm to about 300 nm, and a lateral dimension of about 90 nm to about 300 nm.

In an example, each nanostructure has a cross-sectional shape of a rectangle, a triangle, a circle, a cross, or a hexagon.

In an example, each nanostructure is a pillar or a hole.

In an example, the protective layer has a thickness of about 2 µm to about 4 µm; the first dielectric layer has a thickness of no more than 10 µm; the coating layer has a thickness of no more than 100 nm if the coating layer comprises a metallic material or about 50 nm to 200 nm if the coating layer comprises a dielectric material; the second dielectric layer has a thickness of about 1 µm to about 5 µm; the fluorescent layer has a thickness of about 4 µm to about 10 µm; the adhesive layer has a thickness of about 8 µm to about 25 µm; and/or the substrate layer has a thickness of about 75 µm to about 100 µm.

In an example, the protective layer comprises a polymer that has a refractive index matching that of the first dielectric layer, wherein optionally the polymer is lacquer or varnish; the first dielectric layer comprises a photopolymer resin or a thermoplastic resin; the coating layer comprises: (a) a metallic material selected from aluminum, silver, gold, nickel, chromium, and a combination thereof; or (b) a dielectric material selected from silicon, Ti02, ZrO2, ShN4, Nb2Os, and a combination thereof; the second dielectric layer comprises acrylic lacquer, thermoplastic lacquer, or UV curable lacquer; the fluorescent layer comprises a binding agent or a UV curable resin; the adhesive layer comprises a water-based pressure sensitive adhesive, latent reactive adhesive, or a thermoplastic adhesive; and/or the substrate comprises paper or a polymer, wherein optionally the substrate is a paper or a polymer banknote.

In an example, the dielectric material of the coating layer has a refractive index of at least 2.4.

In an example, the color emitted by the device is detectable from the protective layer, wherein optionally the color is angle variant or invariant.

In an example, the color emitted by the device has a peak wavelength of about 420-460 nm, about 520-560 nm, or about 595-635 nm.

In an example, the second dielectric layer is configured to reduce transferring of roughness of the adhesive layer, the fluorescent layer, or the substrate to the first dielectric layer and the coating layer.

In an example, the device is configured to be used as an anti-counterfeiting feature.

In another aspect, the present disclosure is directed to a device configured to emit two or more colors in a visible range. The device includes a first dielectric layer having a first periodic array of nanostructures and a second periodic array of nanostructures on a first side. Further, the device includes a coating layer disposed on the periodic arrays, the coating layer comprising a metallic or dielectric material, wherein the combination of the coating layer and the first periodic array forms a first optical filter configured to transmit UV light and block visible light at a first wavelength range, and wherein the combination of the coating layer and the second periodic array forms a second optical filter configured to transmit UV light and block visible light at a second wavelength range that is different from the first wavelength range. Additionally, the device includes a fluorescent layer disposed on or in proximity to the coating layer, the fluorescent layer comprising a plurality of fluorescent compounds dispersed therethrough, wherein when illuminated by UV light, the fluorescent compounds are configured to emit visible light, which is filtered by the first and second optical filters to produce a first color and a second color respectively.

In a related aspect, the present disclosure extends to a method of emitting two or more colors in a visible range of wavelengths. The method comprises providing a device configured to emit two or more colors in a visible range as described above with a first dielectric layer comprising a first periodic array of nanostructures on a first side of the dielectric layer and a second periodic array of nanostructures on the first side first side of the dielectric layer, the device further comprising. The method comprises illuminating the fluorescent layer with UV light, emitting visible light from the layer in response to the illuminating with UV light, and filtering the emitted visible light with the first and second optical filters to produce a first color and a second color, respectively.

Examples can include one or more of the following features.

In an example, the first periodic array is adjacent to the second periodic array.

In an example, the first dielectric layer further comprises a third periodic array of nanostructures on the first side; the third periodic array is adjacent to the first or second periodic array; the combination of the coating layer and the third periodic array forms a third optical filter configured to transmit UV light and block visible light at a third wavelength range that is different from the first and second wavelength ranges; and the visible light emitted by the fluorescent compounds is filtered by the third optical filter to produce a third color.

In an example, the two or more colors are selected from red, green, blue, and a combination thereof.

In an example, the device is configured to be used as an anti-counterfeiting feature.

In an example, the coating layer disposed on the first periodic array is a first coating layer; the coating layer disposed on the second periodic array is a second coating layer; and the first coating layer has a different material and/or thickness from the second coating layer.

In another aspect, the present disclosure is directed to a method of making the device described above. The method includes assigning an optical filter to each of the two or more colors, determining a proportion of each of the two or more colors used to add up to a white color, and scaling an area of each optical filter based on the proportion.

Examples can include one or more of any features described herein.

In yet another aspect, the present disclosure is directed to a visual display useful as an anti-counterfeiting feature. The visual display includes a first pixel comprising a first set of two or more sub-pixels, each sub-pixel corresponding to one of the devices described above and being characterized by a color and an associated weight factor, wherein the colors and the associated weight factors of the first set of at least one sub-pixel determine a color value of the first pixel. Further, the visual display includes a second pixel comprising a second set of at least one sub-pixel, each sub-pixel corresponding to one of the devices described above and being characterized by a color and an associated weight factor, wherein the colors and the associated weight factors of the second set of at least one sub-pixel determine a color value of the second pixel.

Examples can include one or more of the following features.

In an example, the color value C of a given one of the first or second pixel is calculated as: *C* = *aA +* {*JB + yG.* A is the color of a first sub-pixel; a is the weight factor associated with A; B is the color of a second sub-pixel; is the weight factor associated with B; G is the color of a third sub-pixel; y is the weight factor associated with G; and each of a, ' and y is between O and 1.

In an example, the first and/or second pixels are color invariant under UV light. In an example, the first and/or second pixels are color variant under UV light. In an example, the color variance comprises a first color viewable within± IO degrees around surface normal and a second color viewable 50 to 70 degrees away from the surface normal. In an example, the second pixel is adjacent to the first pixel.

The present disclosure extends to a method of providing an article with an anti-counterfeiting feature, the method comprising applying a visual display as described above to the article.

In another aspect, the present disclosure is directed to a method of constructing an image using a plurality of the devices described above, the image having an array of pixels. The method includes: (a) at a first pixel having a first color, placing a first device (the first device may be any of devices described above); (b) calculating a wavelength difference between the first color and the color emitted by the first device that is configured to emit a color closest to the first color; (c) adding the wavelength difference to a second color of a second pixel that is adjacent to the first pixel; and (d) at the second pixel, placing a second device (the second device may be any of devices described above) that is configured to emit a color color closest to the second color with the difference added.

Placing the second device may comprise selecting, from a plurality of available devices as described above, a device that is closest in color to the second color with the difference added from the plurality of available devices or selecting a corresponding design for the second device from a plurality of available designs for the second device and placing the selected device or the device in accordance with the design. Likewise, placing the first device may comprise selecting, from a plurality of available devices as described above, a device that is closest in color to the first color from the plurality of available devices or selecting a corresponding design for the first device from a plurality of available designs for the first device and placing the selected device or the device in accordance with the design. Placing the device may include adding a design of the second device to a design of a pixel in question.

Examples can include one or more of the following features.

In an example, the method further includes repeating steps (b)-(d) until each pixel in the array has a device placed therein.

A further aspect of the disclosure includes a method of providing an article with an anti-counterfeiting feature, the method comprising applying a visual display as described above to the article.

Yet a further aspect of the disclosure includes a device to enhance a contrast of a security feature, the device comprising a first dielectric layer having a first periodic array of nanostructures and a second periodic array of nanostructures. A coating layer is disposed on the periodic arrays, the coating layer comprising a metallic or dielectric material. A combination of the coating layer and the first periodic array forms a first optical filter configured to transmit ultraviolet (UV) light and block visible light at a first wavelength range. A combination of the coating layer and the second periodic array forms a second optical filter configured to transmit UV light and block visible light at a second wavelength range that is different from the first wavelength range. A third visible wavelength range different from the first and second wavelength ranges is unaltered by the first or second optical filters.

The details of one or more examples are set forth in the accompanying drawings and the description below. Other features and advantages will be apparent from the description and drawings, and from the claims.

### BRIEF DESCRIPTION OF THE DRAWINGS

The foregoing and other objects of the present disclosure, the various features thereof, as well as the disclosure itself may be more fully understood from the following description, when read together with the accompanying drawings in which:
FIG. I is a diagrammatic representation of an exemplary, nonlimiting security feature including a metasurface filter, in which the metasurface filter includes a patterned dielectric layer and a coating layer disposed thereon, and is configured to transmit a wavelength of light for different viewing angles;
FIG. 2A is a diagrammatic representation of an exemplary, nonlimiting security feature including a metasurface filter, in which the metasurface filter includes a patterned dielectric layer having a coating layer disposed thereon, and is configured to transmit a wavelength of light for different viewing angles;
FIG. 2B is a diagrammatic representation of the cross section of an exemplary, non-limiting security feature including a metasurface filter in which the metasurface filter includes a patterned dielectric layer having a coating layer disposed thereon, and is configured to transmit wavelengths of light that are angle dependent;
FIG. 3 is a diagrammatic representation of an exemplary, nonlimiting security feature including a metasurface filter, in which the metasurface filter includes two or more periodic arrays configured to transmit several wavelengths of light;
FIG. 4 is a diagrammatic representation of one exemplary configuration of the nonlimiting security feature shown in FIG. 3;
FIG. 5 is a diagrammatic representation of an exemplary, nonlimiting security feature including a metasurface filter in which the metasurface filter includes two or more periodic arrays configured to transmit several wavelengths of light;
FIG. 6 is a diagrammatic representation of the cross-section of a single true-color pixel in a device-assisted security feature;
FIG. 7A is a diagrammatic representation of a nonlimiting example of a device-assisted true-color image based on transmissive metasurface optical filters adjustable at the pixel level;
FIG. 7B is a diagrammatic representation of a nonlimiting example of a dielectric layer including periodic array structures forming pixels;
FIG. 8A is a schematic representation of an exemplary, non-limiting device-assisted security feature embedding two constituent true-color metasurface-based images _{Il} and Ii;
FIG. 8B is a schematic representation of one representative image I1 of FIG. 8A, and is composed of color pixels Pi, in which each color pixel Pi embeds at least one sub-pixel made of a metasurface optical filter, and image I1 remains color stable independent of the viewing angle;
FIG. 8C is a schematic representation of one representative image Ii of FIG. 8B, and is composed of color pixels Pi, in which each color pixel Pi embeds at least one sub-pixel made of a metasurface optical filter, and image Ii color shifts depending on the viewing angle;
FIG. 9A is a schematic representation of an exemplary method of populating color pixels with metasurface filters to reconstruct a true-color image;
FIG. 9B is a schematic representation of an initial step in an exemplary method of populating color pixels with metasurface filters to reconstruct a true-color image;
FIG. 9C is a schematic representation of an additional step in an exemplary method of populating color pixels with metasurface filters to reconstruct a true-color image;

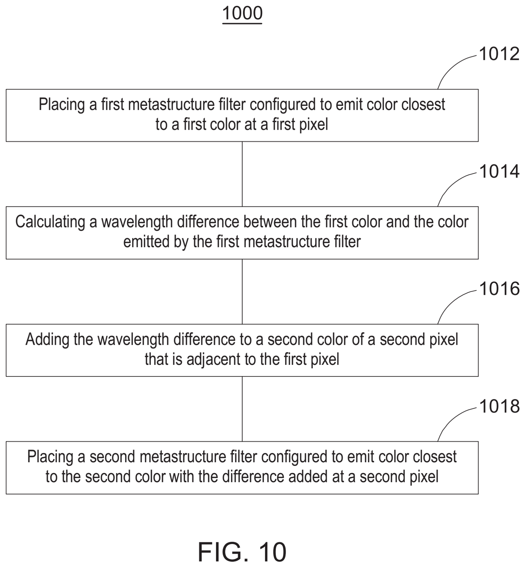

FIG. 10 is a schematic representation of an exemplary method of populating color pixels with metasurface filters to reconstruct a true-color image;
FIG. 11A is a representation of a scanning electron micrograph (SEM) of the tilted top view of an example metasurface filter, where the periodic structures are coated with a thin layer (about 30 nm) of sputtered silver;
FIG. 11B is a representation of an SEM of the cross-sections of an example metasurface filter;
FIG. 11C is a representation of an SEM of the cross-sections of an example metasurface filter;
FIG. 11D is a representation of an SEM of the cross-sections of an example metasurface filter;
FIG. 11E is a representation of an SEM of the tilted top view of an example metasurface filter, where the periodic structures are coated with a thin layer of thermally evaporated silver;
FIG. 11F is a representation of an SEM of the tilted top view of an example metasurface filter, where the periodic structures are coated with a thin layer of thermally evaporated silver;
FIG. 11G is a representation of an SEM of the cross-sections of an example metasurface filter;
FIG. 11H is a representation of an SEM of the tilted top view of an example metasurface filter, where the periodic structures are coated with a thin layer of sputtered silver;
FIG. 111 is a representation of an SEM of the tilted top view of an example metasurface filter, where the periodic structures are coated with a thin layer of sputtered silver;

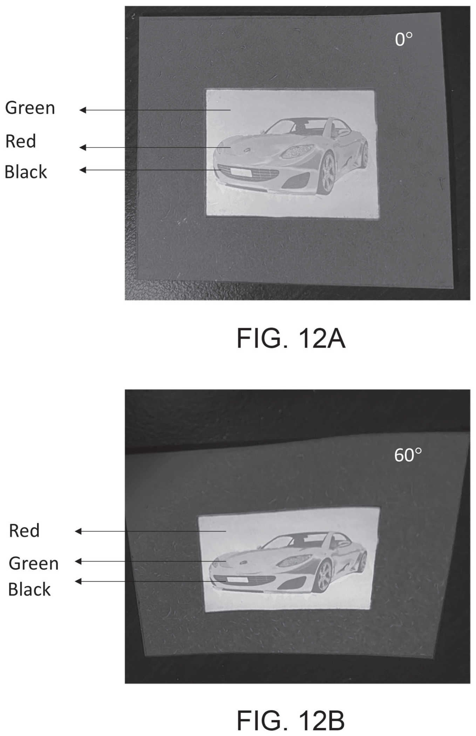

FIG. 12A is a photographic representation of an example metasurface-based color-shifting device-assist security foil applied onto banknote paper, viewed at a first viewing angle; and
FIG. 12B is a photographic representation of the example metasurface-based color-shifting device-assist security foil applied onto banknote paper, viewed at a second viewing angle.

In the drawings, like reference numbers denote like elements.

### DESCRIPTION

Unless defined otherwise, all technical and scientific terms used herein have the same meaning as commonly understood by one of ordinary skill in the art to which this disclosure belongs. The initial definition provided for a group or term herein applies to that group or term throughout the present specification individually or as part of another group, unless otherwise indicated.

As used herein, the articles "a" and "an" refer to one or to more than one *(i.e.,* to at least one) of the grammatical object of the article. By way of example, "an element" means one element or more than one element. Furthermore, use of the term "including" as well as other forms, such as "include," "includes," and "included," is not limiting.

As used herein, the term "about" or "substantially" will be understood by persons of ordinary skill in the art and will vary to some extent on the context in which it is used. As used herein when referring to a measurable value such as an amount, a temporal duration, and the like, the term "about" or "substantially" is meant to encompass variations of ±20% or± 10%, including ±5%, ±1%, and ±0.1% from the specified value, as such variations are appropriate to perform the disclosed methods.

As used herein, the term "visible wavelength range" refers to wavelengths of electromagnetic radiation in a range from about 380 nanometers to about 780 nanometers.

As used herein, the term "block" as used in the context of optical filtering, or blocking, light refers to reducing transmission of light at one or more wavelengths by an amount sufficient to change the color of the light. For example, a wavelength can be considered to be blocked when about 50% or more (e.g., 60% or more, 70% or more, 80% or more, 90% or more) of incident light at that wavelength is removed from the filtered light.

By reference to "proximity" in the context of the disposition of the fluorescent layer, it will be understood that the fluorescent layer need not be disposed directly on the coating layer. Rather, the fluorescent layer is in proximity to the coating layer if the UV light transmitted by the optical filter can excite substantial, functional amounts of emitted visible light. For example, a further dielectric layer may be disposed between the coating and fluorescent layers. The further dielectric layer may serve as a planarizing layer configured to reduce transferring effects of any roughness of the fluorescent layer or other adjacent layers

The present disclosure describes metasurface optical filters for selecting a wavelength (or a range of wavelengths) within a certain range of viewing angles while suppressing other wavelengths and optionally inducing a color shift effect when a user navigates through different viewing angles

The present disclosure relates to optically variable displays, where transmissive metasurface optical filters serve as color-selective pixels to realize true-color image displays. The metasurface optical filters (1) transmit UV light, which enables excitation of fluorescent compounds located beneath the metasurface optical filter in response to the UV light, and (2) partially filter a portion of visible light emitted by the fluorescent compounds. In contrast with multi-layer thin film stacks, where transmission resonances are determined by the refractive index and thickness of the thin film layers, the transmission spectra of metasurface optical filters may be tailored by changing the dispersion of optical modes in the metasurface layer. Therefore, the present disclosure provides metasurface filters with desired transmission characteristics using plasmonic or dielectric lattices that can be embedded as color pixels to create a true-color or multi-color image. The pixel-based imagery displayed by metasurface structural colors differentiates this device from the existing UV-assisted security features based on multi-layer thin film stacks. In addition, the pixel-based display proposed here may offer color shifting functionality as each metasurface optical filter can be designed to be either angularly variant or invariant.

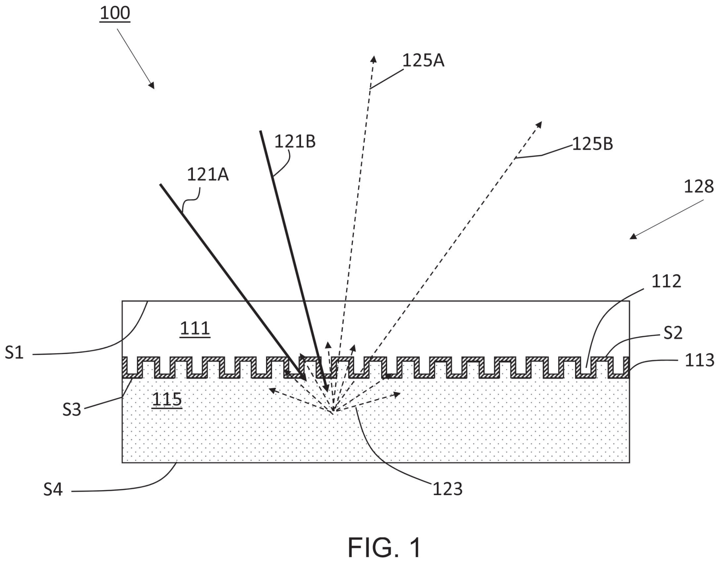

An exemplary color selective pixel structure 100 includes multiple layers collectively configured to emit light at a prescribed wavelength in the visible range, for a given viewing angle, in response to incident UV light, is shown in FIG. 1. In some cases, the structure 100 may be used as anti-counterfeiting features or may be used for any other applications that utilize emission of a particular wavelength at a particular viewing angle (e.g., but not limited to, applications that involve displaying an image that can change when viewing at different angles, and the like). The structure 100 may be a part of a display

The structure 100 includes a first dielectric layer 111 having a surface S2 patterned with a periodic array of nanostructures 112. The opposite surface S1 is planar.

A coating layer 113 is disposed (e.g., but not limited to, formed by coating, evaporation, sputtering, and the like) on the periodic array of nanostructures 112. The coating layer 113 conforms to the pattern of surface S2, forming a layer of substantially constant thickness on the top, bottom, and sidewalls of the nanostructures. The coating layer may be metallic or dielectric. The structure 100 includes a fluorescent layer 115 disposed adjacent to the coating layer 113, on a surface S3 of coating layer 113, with the coating layer 113 separating fluorescent layer 115 from dielectric layer 111. Fluorescent layer 115 includes a material that emits fluorescence when illuminated with certain wavelengths of light (e.g., but not limited to, ultraviolet and/or visible light).

The first dielectric layer 111 may have a thickness of a few microns (µm). For instance, the dielectric layer 111 may have a thickness in a range of 1-10 *µm* (e.g., but not limited to, about 2 *µm* or more, about 3 *µm* or more, about 4 *µm* or more, about 5 *µm* or more, about 6 *µm* or more, about 7 *µm* or more, about 8 *µm* or more, about 9 *µm* or more, such as up to about 10 µm). The thickness may be mainly determined by the bulk of the dielectric layer, with the structures formed in the layer and described below typically being of a height that is small compared to the thickness of the dielectric layer 111. The thickness may be specified as an average thickness between any peaks and troughs of the structures, a minimum thickness corresponding to troughs defined by the structures or a maximum thickness corresponding to peaks defined by the structures. In many practical implementations in which the thickness is of the order of micrometer and the structure height is of the order of nanometer, the precise definition typically has little bearing on the performance of the device 100.

The first dielectric layer 111 may be composed of one or more of a variety suitable dielectric materials that substantially transmit the incident light and the emitted light (e.g., first dielectric layer 111 can transmit about 80% or more of normally incident light at operative wavelengths of structure). Further the material of the first dielectric layer 111 has an index of refraction different from a material adjacent to the first dielectric layer 111 (herein, referred to as an ambient layer 128, as shown in FIG. 1). In an example implementation, the change in refractive index between the ambient layer 128 and the first dielectric layer 111 may be in a range of about 0.38-1 including all the values and ranges in between. In some examples, dielectric layer 111 is a resin with a refractive index of about 1.52. Other suitable materials include quartz, AhO3, a fluoropolymer, such as ETFE, and the like. In some cases, the refractive index of the dielectric layer may be as low as about 1.38. In certain cases, the refractive index can be as high as about 1.9 or about 2. In some implementations, an ambient layer 128 is air with an index of refraction close to 1 for all operative wavelengths. Alternatively, the ambient layer 128 may be any other suitable gas, liquid (e.g., water), and the like.

In some examples, the index of refraction of the first dielectric layer 111 is selected based on the wavelength of incident light that is expected to illuminate the surface S1. For example, if structure 100 is to be illuminated with ultraviolet light or blue visible light (e.g., an operative wavelength is between about 210 nanometers (nm) and about 400 nm), a UV light transparent material may be used (e.g., but not limited to, quartz, AbO3, a fluoropolymer, such as ETFE, and the like). In some cases, the first dielectric layer 111 may be formed from photopolymer resin or a thermoplastic resin.

The periodic array includes periodically formed nanostructures having a characteristic size that can be in a range from a few tens of nanometers to a few micrometers (e.g., but not limited to, tens to hundreds of nanometers). The size of the nanostructures may be dependent on the wavelength of light emitted by the fluorescent layer 115 and/or the operative wavelengths of light incident onto the structure 100 that cause the fluorescence. For example, each nanostructure in the periodic array 112 may have a size of at least about 20 nm (e.g., but not limited to, at least about 50 nm, at least about 100 nm, at least about 150 nm, at least about 200 nm, at least about 250 nm, or at least about 300 nm, including all the values and ranges in between); in some implementations, each nanostructure in the periodic array may have a size of no more than about 400 nm, no more than about 450 nm, no more than about 500 nm, no more than about 550 nm, no more than about 600 nm, or no more than about 700 nm, including all the values and ranges in between. Combinations of the above-referenced ranges for the size are also possible (e.g., but not limited to, about 20 nm to about 700 nm). In examples where the size of the nanostructures vary across structure 100, or in examples where the characteristic size varies for each nanostructure (such as the diameter of a non-circular cylinder), the characteristic size of the nanostructure may be considered the largest size measured across the structure in the direction of variation. The characteristic size may be a pitch between nanostructures, a lateral dimension of the nanostructures (both measured along the plane of the dielectric layer 111), or a height of the nanostructures (measured normal to the plane of the dielectric layer 111).

The combination of the periodic array of nanostructures 112 and the coating layer 113 forms an optical filter that filters visible light at a certain wavelength range. For such a configuration, the nanostructures may have a vertical dimension (i.e., a height) that ranges between a few tens of nanometers to a few hundreds of nanometers (e.g., but not limited to, between about 40 nm and about 300 nm), and a lateral dimension that ranges between a few tens of nanometers to a few hundreds of nanometers (e.g., but not limited to, between 90 nm and about 300 nm). Such nanostructures may be formed using any suitable approaches (e.g., but not limited to, e-beam lithography, UV photolithography, etching, imprinting, epitaxial growth, or a combination thereof).

The periodic array of nanostructures 112 may have a periodicity (pitch) of about 120 nm to about 700 nm, including all the values in between. In some examples, the periodic array of nanostructures 112 may have a periodicity greater than about 350 nm and may diffract. If a device-assist optical effect with muted diffraction under illumination of visible wavelength and/or UV lighting conditions is desired, the periodicity can be between about 120 nm and about 300 nm. The periodic array 112 may have tens or hundreds of rows (e.g., in the case of a one-dimensional array) and/or columns (e.g., in the case of a two-dimensional array). The number of columns can be determined by the pixel size divided by the periodicity in a first direction (e.g., x-direction), while the number of rows is determined by the pixel size divided by the periodicity in an orthogonal direction (e.g., y-direction). For instance, the periodic array 112 may have up to 400 columns and/or up to 400 rows. In some examples, the periodic array has up to 350 columns and/or up to 350 rows. In some examples, the periodic array has up to 300 columns and/or up to 300 rows.

The nanostructures may have any suitable shape. For example, the nanostructures may be hemispherical elements, pyramids, cones, truncated cones, columns (e.g., but not limited to, pillars) with a rectangular cross-section, columns (e.g., but not limited to, pillars) with a circular, hexagonal, or cross cross-section, holes (e.g., but not limited to, cubical cavities, hexagonal cavities, conical cavities, columnar cavities, hemispherical cavities), and the like. For instance, the cross-sectional shape of the nanostructures may include a rectangle, a triangle, a circle, a pentagonal, a hexagonal, and the like.

Table 1 below shows some possible examples of the dimensions and periodicities of the periodic array of nanostructures 112. All dimensions are in nanometers. Particularly in plasmonic metasurface optical filters (once the thin coating layer 113 is coated on the nanostructures 112), there is no linear/proportional relation between the wavelength and the size of the plasmonic scatterers (nanostructures). The resonance wavelength depends on the dominant plasmonic resonances of the scatterers and how the resonances interplay with each other.

**TABLE 1**

| Parameters of structures for optically filtering light at different wavelengths | | | | |
|---|---|---|---|---|
| | Structure R | Structure G | Structure B | Black Structure |
| Periodicity | 175-180 | 220-260 | 300-330 | < 180 |
| Dimension | 120-160 | 160-230 | 240-280 | 50-160 |
| Overall thickness | 50-100 | 50-100 | 100-200 | 50-200 |
| shapes | Nano-pillar | Nano-pillar | Nano-pillar | Nano-pillar |

For example, a structure R (which may be used for transmitting a red color) may have periodicity of about 175 nm - 180 nm, characteristic dimensions of about 120 nm - 160 nm, overall thickness of about 50 nm to 100 nm, and be formed of nano-pillars, as shown in Table 1. Other parameters for structures G and B are also shown in Table 1. The structure G may be used for transmitting a green color and the structure B may be used for transmitting a blue color. Structures for blocking visible light are also possible. For example, a Black structure for blocking visible light can have a periodicity less than 180 nm (e.g., 175 nm or less, 170 nm or less, 160 nm or less), a characteristic dimension of 50 nm - 160 nm, overall thickness of 50 nm to 200 nm, and be formed of nano-pillars.

A thickness of the periodic array of nanostructures 112 may vary between about 50 nm and about 300 nm. The thickness may change depending on the process of forming the periodic array of nanostructures 112 or parameters of the metastructure optical filter. In various examples, the thickness of the periodic array of nanostructures 112 is determined by one or both of the following factors: (a) an interplay of plasmonic (Mie resonances) in plasmonic (dielectric) metasurfaces, and (b) the manufacturing complexities associated with nanoimprinting lithography of high-aspect-ratio holes or pillars forming the periodic array of nanostructures 112.

In some cases, the nanostructures may include sublayers configured to further alter the average index of refraction of the nanostructures or configured to guide light within the nanostructures.

The first dielectric layer 111 may be formed from UV/thermal resin patterned with metasurface optical filters formed using nanoimprint lithography. The first dielectric layer 111 may be an embossed resin layer that embeds shapes of metasurface nanostructures. Instead of UV resin, thermoplastic resin can be used to form the first dielectric layer 111, and the embossing methods are thermal instead of photon-assisted in that case.

The coating layer 113 may be formed from a metallic or dielectric material. In some cases, some surfaces of the nanostructures of the periodic array 112 are coated. Certain surfaces may be uncoated. For example, when the nanostructures are columns having top surfaces and side surfaces, the top surfaces may be coated. Alternatively, both top surfaces and side surfaces may be coated. The coating of the nanostructures may depend on the method used for coating. For example, when sputtering is used, the side surfaces of the nanostructure may be coated. In some cases, the nanostructures of the periodic array 112 may be coated uniformly. For example, when the nanostructures are columnar cavities, the bottom of these cavities may have a larger layer thickness than the sides of these cavities. In one case, the layer thickness may fluctuate by at least about 5%, about 10%, about 15%, about 20%, about 25%, about 30%, about 35%, about 40%, about 45%, about 50%, about 55%, about 60%, about 65%, about 70%, about 75%, about 80%, about 85%, about 90%, about 95%, about I00%, of the smallest layer thickness value. Alternatively, the coating layer may be relatively uniform (e.g., the layer thickness may fluctuate by less than about 50%.

The coating layer 113 may be a metallic or dielectric layer. In some examples, when the coating layer 113 is dielectric, the difference of the index of refraction of the coating layer 113 and the first dielectric layer 111 is between 0.1 and 3 (e.g., about 0.15 or more, about 0.3 or more, about 0.5 or more, about 0.8 or more, about I or more, about 2 or more). In some cases, the difference of the index of refraction of the coating layer 113 and the first dielectric layer 111 is between I and 2.6, including all the values and ranges in between. When the coating layer 113 is dielectric, the index of refraction of the coating layer 113 may in a range of 1.1 to 4 for the wavelength of an incident light or for the wavelength of the light emitted by the fluorescent material. The coating layer 113 may be made from a dielectric material selected from silicon, TiO2, ZrO2, ShN4, Nb2Os, and a combination thereof. In some cases, when the coating layer 113 is dielectric, the index of refraction of the coating layer 113 may be at least about 2.4 to provide sufficient refractive index contrast when adjacent to the first dielectric layer 111.

In some cases, the coating layer 113 may be made from a metallic material such as aluminum, silver, gold, nickel, chromium, titanium, and a combination thereof. In some implementations, the coating layer 113 may have multiple metallic sublayers. Additionally, when the coating layer 113 is formed from the metallic material, the metals may be annealed (e.g., but not limited to, heated) during or after the deposition. In some cases, the coating layer 113 may include multiple sublayers with at least some sublayers being metallic and at least some sublayers being dielectric.

When the coating layer 113 includes a metallic material, the coating layer 113 may have a thickness of no more than about 200 nm (e.g., but not limited to, about 150 nm or less, about 100 nm or less, about 75 nm or less, about 50 nm or less, including all the values and ranges in between); the coating layer 113 may have a thickness of at least about 15 nm (e.g., but not limited to, about 20 nm or more, about 25 nm or more, about 30 nm or more, about 35 nm or more, about 40 nm or more, including all the values and ranges in between). In particular, the thickness of the coating layer 113 is selected such that the attenuation of the incoming light (e.g., light incident as arrows 121A and 121B) by the coating layer 113 is sufficiently small (e.g., but not limited to, no more than about 5%, no more than about I0%, no more than about 15%, or no more than about 20%), such that most of the incoming light illuminates the fluorescent layer 115, and cause emission of light 123. In some cases, the thickness of the metallic layer may be selected to have attenuation of the incoming light less than about 40%. In some cases, the thickness of the coating layer 113 may be less than the absorption length (at the absorption length, the intensity of light is reduced by a factor of an exponent (i.e., exp(1)). For example, for the wavelength of 360 nm of the incoming light, the absorption length for the layer of nickel is J\./4nk = (360[nm])/( 4rr • 2.14)~ *13nm* (nickel has an extinction coefficient of 2.14 for a wavelength of 360 nm).

When the coating layer 113 is formed from a dielectric material instead of a metallic material, the thickness of the coating layer 113 may be greater. For example, the thickness of the dielectric coating layer 113 may be between about 50 nm and about 300 nm. In some cases, the refractive index of the coating layer 113 may be at least about 1.2, 1.4, 1.6, 1.8, 2.0, 2.2, 2.4, 2.6, and the like at a wavelength of the incident light 121A and/or at a wavelength of the emitted light 123.

The coating layer 113 and the nanostructures 112 form a metasurface optical filter (herein also referred to as a metasurface filter or simply an optical filter) configured to transmit incoming light at one or more operative wavelengths (e.g., but not limited to, ultraviolet light having at least one wavelength in the range of 210 nm to 380 nm, including any wavelength values in between, and/or short wavelength visible light having at least one wavelength in the range from 380 nm to 480 nm) and block at least some visible wavelengths (e.g., but not limited to, block a range of wavelengths in the visible range corresponding to red, green, and/or blue light). For example, at least some of the light 123 emitted from fluorescent layer 115 is transmitted through the optical filter along the directions indicated by arrows 125A and 125B.

The coating layer 113 provides the material and modal dispersion properties for spectral filtering. If the coating layer 113 is metallic, the plasmonic resonances forming in this layer may tailor the spectral characteristics of the optical filter. These plasmonic modes are enabled by the negative refractive index of the thin metallic film and form at the interface of the thin metal layer and the surrounding dielectric matrix. If the coating layer 113 is dielectric, the refractive index of the thin film is chosen to be high enough to support optical modes when positioned in the low-refractive-index medium made of UV resin or similar dielectric materials. In some examples, the coating layer 113 is formed from Nb2Os or Silicon. In addition to the high refractive index contrast, the dielectric film forming the coating layer 113 may be sufficiently thick to support Mie resonances and permit optical mode formation. The thickness of the coating layer 113 may depend on the difference between the refractive index of the first dielectric layer 111 and the refractive index of the coating layer 113. For example, when the coating layer 113 has a refractive index of about 4 (e.g., but not limited to, silicon) at a visible wavelength emitted by the fluorescent layer 115, and the first dielectric layer 111 has a refractive index of about 1.4 at the visible wavelength (e.g., but not limited to, a resin), the thickness of the coating layer 113 may be larger than about 40 nm. When the coating layer 113 has a lower index of refraction (e.g., but not limited to, when the coating layer is formed from TiO2 and has an index of refraction of about 2.7 at the visible wavelength), the thickness of the coating layer 113 may be larger than about 100 nm. In some cases, the thickness of the coating layer 113 may range between a few tens of nanometers and a few hundreds of the nanometers.

As described above, the structure 100 includes the fluorescent layer 115. The fluorescent layer 115 functions as an embedded light source for the metasurface optical filter. The fluorescent layer 115 may be formed from a plurality of fluorescent compounds dispersed therethrough. For example, the fluorescent layer 115 comprises different types of fluorescent compounds which fluoresce at different ranges of visible spectrum under UV light excitation or short wavelength visible light (e.g., but not limited to, 350 nm to 400 nm). The mixing ratio of the types of fluorescent compounds determines the wavelength and intensity of the emitted light from the fluorescent layer 115. When the fluorescent layer 115 is illuminated by the suitable incident light (e.g., UV light), the fluorescent compounds of the fluorescent layer 115 emit visible light. Visible light emitted by fluorescent layer 115 propagating back towards the side which is illuminated is filtered by the optical filter formed by layers 111 and 113.

In some implementations, the fluorescent layer 115 may include a binding agent or a UV curable resin. The fluorescent layer 115 may have a thickness of a few microns. For example, the fluorescent layer 115 may have a thickness in the range from 4 µm to 10 µm.

The optical filter is configured to transmit light at one or more wavelengths which excite the fluorescent compounds in fluorescent layer 115 (e.g., but not limited to, UV light) and block visible light at one or more wavelengths. The wavelength range blocked by the optical filter is determined by the characteristics of the layers 111 and 113, such as the parameters of the periodic array, material, and thickness of the dielectric layer 111, and/or material and thickness of the coating layer 113.

The design of the structure 100 described herein can be facilitated by the use of simulation software such as Lumerical, COMSOL Multiphysics^{®}, and MEEP. Once the design is finalized, the structure 100 may be fabricated using any suitable process. For instance, the layers of structure 100 may be fabricated via any suitable approach (e.g., but not limited to, via sputtering, evaporation, lithographic patterning, and the like). In an example fabrication process, an electron beam lithography may be used for patterning the resist on a silicon (Si) wafer. Then the resist patterned is transferred onto a Ni hard mask using a sputtering deposition (for seed layer) followed by electroforming. The Ni shim (detached form the resist and the Si wafer) becomes the mold for nanoimprinting. Further, the nanoimprint lithography and physical vapor deposition (PVD) are used for making the devices a both lab-scale and manufacturing scale.

Further, the structure 100 may be formed on a suitable substrate (not shown in FIG. 1) and after being formed on the substrate, released from the substrate, and, optionally, moved to a different substrate. For example, the structure 100 may be formed on a first substrate such that the first substrate is adjacent to the side SI of the structure. Further, the structure 100 may be moved to a second substrate, such that the side S4 of the structure 100 is adjacent to the second substrate. Subsequently, the structure 100 may be released from the first substrate via any suitable approaches (e.g., etching a sacrificial layer between the first substrate and the structure I00, laser cutting, laser heating, and the like).

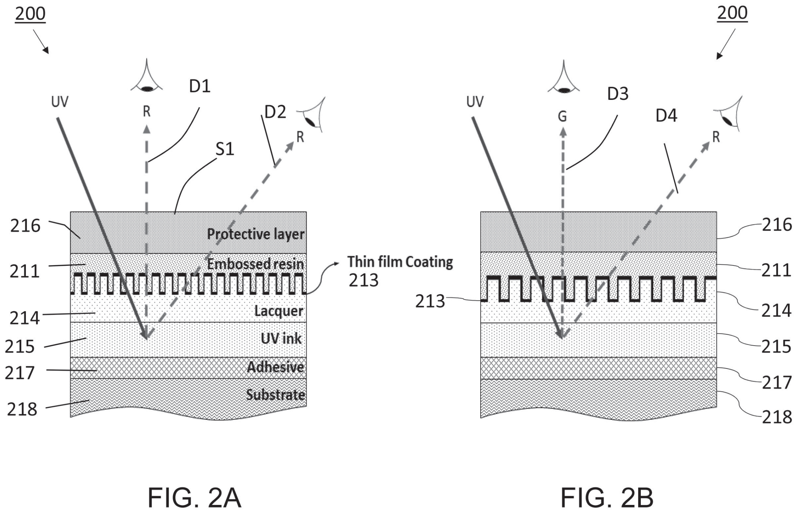

In various examples, additional layers may be included in the structure to further improve the performance of a structure that is configured to emit light at a prescribed wavelength, for a given emission angle when irradiated by an incident light. An example of a structure 200 that includes additional layers is shown in FIGS. 2A and 2B. The additional layers may include a second dielectric layer 214 disposed between a fluorescent layer 215 and a coating layer 213, an adhesive layer 217 disposed on the florescent layer 215, and a substrate 218 disposed on the adhesive layer 217 is shown in FIG. 2A. Further, a protective layer 216 may be disposed adjacent to a second side of the dielectric layer 211, where the second side is being opposite to the side (the first side) on which the coating layer 213 is disposed as shown in FIG. 2A. The dielectric layer 211 and the coating layer 213 may be similar in form or in function respectively to the dielectric layer 111 and the coating layer 113 of the structure 100. In some cases, when the coating layer 213 is dielectric, the index of refraction of the coating layer 213 may be at least about 2.4 to provide sufficient refractive index contrast when sandwiched between the dielectric layer 211 and the second dielectric layer 214.

It should be noted that while some of the above-mentioned additional layers 211-218 may be present, others may be absent. For example, in some configurations, the adhesive layer 217, substrate layer 218, and/or protective layer 216 may be absent.

The second dielectric layer 214 may serve as a planarizing layer to reduce transferring effects of the roughness of the fluorescent layer 215, the adhesive layer 217, or the substrate 218 to the first dielectric layer 211 and the coating layer 213. The second dielectric layer 214 may be formed from acrylic lacquer, thermoplastic lacquer, or UV curable lacquer. Further, in some cases, the second dielectric layer 214 may have a thickness between hundreds of nanometers to a few microns. For instance, the second dielectric layer 214 may have a thickness of about I *µm* to about 5 *µm,* including all the values in between. The second dielectric layer 214 has an optical refractive index similar to that of the first dielectric layer 211, and together with the first dielectric layer 211, the second dielectric layer 214 forms a low-refractive-index matrix encompassing the functionalizing the coating layer 213 which may be a metallic or high-refractive-index dielectric layer.

The adhesive layer 217 is utilized for adhering the structure 200 onto the substrate 218, which can be flexible or inflexible. The adhesive layer 217 has a similar refractive index to that of the first or the second dielectric layer 211 or 214. The adhesive layer 217 may have a thickness of a few microns or a few tens of microns. For example, the adhesive layer 217 may have a thickness of about 8 µm to about 25 µm. The adhesive layer 217 may be a water-based pressure sensitive adhesive, a latent reactive adhesive, or a thermoplastic adhesive. The adhesive layer 217 may include various adhesive layer components. For example, such components may include Nolax S35.3110, Nolaz S35.3218, and Stahl XR-5508. In some cases, Nolax S35.3110 may be a leading primer layer adhesive, Nolaz S35.3218 may be an adhesive layer, and Stahl XR-5508 may be a crosslinker.

The substrate layer 218 serves as the carrier of the structure 200 and can be optically transparent or opaque depending on the application. The substrate layer 218 may have a thickness of a few tens of microns or as much as 100 microns or more. For example, the substrate layer 218 may have a thickness of 75 µm to 100 µm. The substrate layer 218 may be a paper, a polymer (e.g., but not limited to, a transparent polymer or opaque polymer), a fabric, or any other suitable surface of a material on which the adhesive layer may be deposited (e.g., but not limited to, the material may be ceramics, wood, metal, glass, and the like). In one example, the substrate is a paper or a polymer-based banknote.

The protective layer 216 is configured to substantially transmit visible and ultraviolet light (e.g., but not limited to, the protective layer 216 is configured to absorb minimal visible light). For example, the protective layer 216 transmits at least about 60% or more (e.g., but not limited to, about 70% or more, about 80% or more, about 90% or more, about 95% or more, or about 99% or more of visible light). Further the protective layer 216 may transmit at least about 50% or more (e.g., but not limited to, about 60% or more, about 70% or more, about 80% or more, or about 90% or more of the ultraviolet light). In some cases, the protective layer 216 transmits light that has a wavelength in a range from 210 nm to 460 nm, including all the wavelength values in between. The protective layer 216 can be sufficiently thin to prevent significant attenuation of the visible and/or ultraviolet light. In some implementations, the protective layer 216 is a few microns thick. For example, the protective layer 216 may have a thickness in a range from 2 µm to 4 µm. In some implementations, the protective layer 216 includes a polymer that has a refractive index matching that of the first dielectric layer 211 (when the refractive index is measured for a visible light or/and for the ultraviolet light). In some cases, the protective layer 216 may have an index of refraction that is at most 10% different from the index of refraction of the first dielectric layer 211. The protective layer 216 may be any suitable polymer, such as a lacquer or varnish, which may be either water-based, UV-curable, or thermal curable. In general, the protective layer 216 may be any chemically stable layer that is transparent to UV and visible light, can be thin enough to be used in security features, and adheres to the dielectric layer 211.

The protective layer 216 may have multiple functions. In some implementations, the protective layer 216 protects the structure 200 from mechanical and/or chemical damage. For example, the protective layer 216 can protect the elements/layers underneath the protective layer 216. In some cases, various components of a device that includes structure 200 may be protected by the protective layer 216 against mechanical, chemical damage. Further, the protective layer 216 may be an anti-reflective layer and include suitable sublayers causing the anti-reflective properties of the protective layer 216.

In various examples, the structures described herein (e.g., but not limited to, the structures 100 and 200) are configured to emit visible light from the top surface of the protective layer 216, as shown in FIG. 2A. If the protective layer 216 is not present, the second side of the dielectric layer 211 (e.g., but not limited to, the side opposite to the side coated by the coating layer 213) emit the visible light, which is initially emitted by the fluorescent layer 215.

The light emitted from the structure 100 or 200 may be angle invariant, at least over a range of emission angles. For example, if the emitted light includes a particular wavelength (e.g., the emitted light is of a particular visible color that may be described, for instance, using an RGB color model), that wavelength of light may be emitted at multiple angles across a range. For instance, light with a wavelength R (e.g., but not limited to, color red) can be emitted by the fluorescent layer 215 when irradiated by UV light as shown in FIG. 2A. The light with the wavelength R can be observed multiple directions, including at a direction DI perpendicular to the structure 200 as well as at another direction D2 at a different angle.

Alternatively, or in addition, emitted light from the structure 100 or 200 at one or more wavelengths may be angle dependent. For example, the structure can emit light of a first color in one direction and light of a different color in a different direction. This effect is shown in FIG. 2B, wherein the structure 200 emits green light G along direction D3 perpendicular to the structure, and emits red light R along another direction D4. This effect is provided by the optical filter formed by the coated nanostructures of dielectric layer 211 and coating 213, which transmits the light of wavelength R along a first range of directions (e.g., including D4), while preventing the transmission of light of wavelength Rat other directions. Conversely, the optical filter transmits light of wavelength G along a second, different range of directions (e.g., including D3), while preventing the transmission of light of wavelength G at other directions. Directions D3 and D4 may be different by at least 5 degrees, at least 10 degrees, at least 15 degrees, at least 20 degrees, or at least 30 degrees. In some cases, the difference in observed wavelength of light may be proportional to the difference in the angular direction. For instance, if a red wavelength of light is observed at a normal direction and the violet wavelength of light is observed at a direction that is at higher angles of incidence, then various colors between red and violet (e.g., but not limited to, rainbow colors such as orange, yellow, green, blue, and magenta) may be observed accordingly for various angles between the normal and the higher incident angle of the violet. In other words, the optical filter can have a dispersive effect. In various examples, a variety of angular distributions of wavelengths may be implemented by adjusting the parameters of the optical filter formed by the dielectric layer 211 and the coating layer 213. As a result, the fluorescent layer can emit light at a variety of colors and different colors from the fluorescence are observed at different angles. For example, a green color may be observed at the normal direction and a red color may be observed at 45-degree angle to the normal.

In some cases, light of the same wavelength may be observed at multiple, separate angles. For instance, a blue light may be observed at a normal direction and at a 45-degree angle measured from the normal direction, while red light may be observed at angles of about 30 degrees and about 60 degrees as measured from the normal direction. Additionally, or alternatively, a particular color may be observed across a range of directions. For example, a blue light may be observed at directions with angles ranging between 15 and 30 degrees (measured from the normal direction) and red light may be observed at directions with angles ranging between about 60 degrees and about 75 degrees as measured from the normal direction. In some cases, the same color light may be observed at different directions, but with a different intensity. For instance, a bright blue color may be observed at a normal direction, and a dark blue color may be observed at an angle of 45 degrees.

It should be noted that the structures 100 and 200 may be used in devices that can emit light of any suitable wavelength (e.g., but not limited to, the devices may emit light in a visible, infrared, ultraviolet, or microwave spectra). As described before, in some configurations, the devices may emit a light of a particular wavelength at different angles (e.g., but not limited to, the emission of light may be angle invariant), and in other cases, the wavelength of light emitted at a first angle may have intensity that is different than the wavelength of light emitted at a second angle that is different from the first angle. For example, the light may be emitted with a peak wavelength of about 420 nm-460 nm (e.g., but not limited to, blue light), of about 520 nm-560 nm (e.g., but not limited to, green light), or about 595 nm-635 nm (e.g., but not limited to, red light).

In general, the fluorescent layer 215 may include more than fluorescent material. For example, the fluorescent layer 215 may have a first fluorescent material configured to emit visible light with a peak wavelength of about 420 nm-460 nm. Further, in some cases, the fluorescent layer 215 may have a second fluorescent material configured to emit visible light with a peak wavelength of about 520 nm-560 nm. Additionally, or alternatively, the fluorescent layer 215 may have a third fluorescent material configured to emit visible light with a peak wavelength of about 595 nm-635 nm.

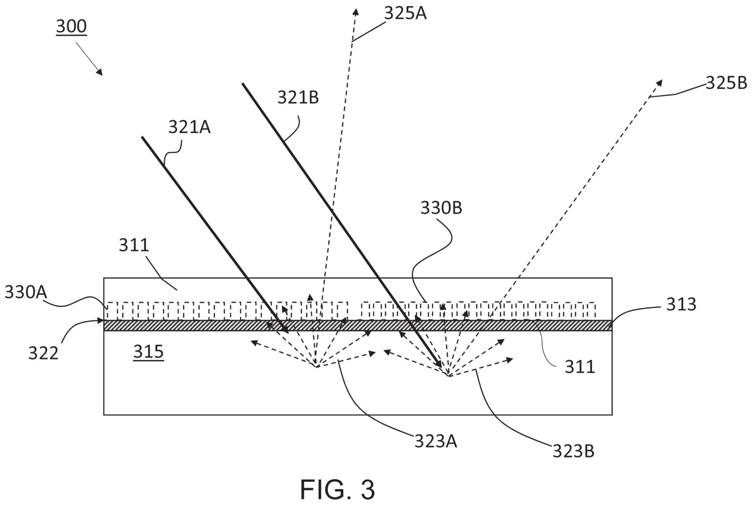

In the foregoing examples, structures 100 and 200 are both shown with a single periodic array of nanostructures. More generally, devices can include more than one periodic array so that the device has different optical properties in different areas. A simple example of such a device is structure 300 shown in FIG. 3. The structure 300 includes a dielectric layer 311 having a first periodic array of nanostructures 330A and a second periodic array 330B formed by a patterned surface 322 of the first dielectric layer 311. Further, the structure 300 includes a coating layer 313 disposed (e.g., but not limited to, coated, evaporated, sputtered, and the like) on the patterned surface 322. A fluorescent layer 315 is provided on the opposite surface of the coating layer 313.

The coating layer 313 and the fluorescent layer 315 may be similar to or the same as, in form or in function, respective layers 113 and 115. Further the dielectric layer 311 may be similar in form or in function to dielectric layer 111 with the difference that the dielectric layer 311 includes at least two periodic arrays 330A and 330B. The periodic array 330A has one or more physical parameters that are different from the periodic array 330B. For instance, the periodic array 330A includes first periodically formed nanostructures having a first characteristic size, while periodic array 330B includes second periodically formed nanostructures having a second characteristic size (e.g., but not limited to, a lateral dimension) that is different from the first characteristic size. For instance, the first characteristic size may be commensurable to (e.g., about) the first peak wavelength of the emitted light and the second characteristic size may be commensurable to the second peak wavelength. In some cases, the first characteristic size may be 10% to 400% larger than the second characteristic size. For instance, the periodic array 330A may have structures with the characteristic size of a few tens of nanometers (e.g., but not limited to, about 30 nm, about 40 nm, about 50 nm, about 60 nm, about 70nm, and the like) and the periodic array 330B may have structures with the characteristic size of a few hundreds of nanometers (e.g., but not limited to, about 100 nm, about 200 nm, about 300 nm, about 400 nm, about 500 nm, and the like).

The periodic arrays may have nanostructures that have vertical dimensions that range between a few tens of nanometers to a few hundreds of nanometers (e.g., but not limited to, between at least about 40 nm and about 300 nm), and lateral dimensions that ranges between a few tens of nanometers to a few hundreds of nanometers (e.g., but not limited to, between at least about 90 nm and about 300 nm). Such nanostructures may be formed using any suitable approaches (e.g., but not limited to, e-beam lithography, UV photolithography and etching, imprinting, epitaxial growth, or a combination thereof). In one implementation, at least one of a vertical dimension or a lateral dimension of each nanostructure in the first periodic array 330A is at least 10% larger than the respective vertical dimension or lateral dimension of each nanostructure in the second periodic array 330B.

Alternatively, in another implementation, the first periodic array 330A may have nanostructures that have the same size and/or shape as the nanostructures of the second periodic array 330B, while having different periodicities. Herein the periodicity refers to the lattice parameters of the periodic arrays 330A and 330B. The lattice parameters indicate how far the nanostructures are spaced, and what type of lattice these nanostructures form. For instance, the nanostructures may form a particular unit cell that is periodically duplicated as a suitable lattice (e.g., but not limited to, a rectangular lattice, a hexagonal lattice, and the like). In some cases, the first periodic array 330A may have first lattice vectors (which determine the periodicity of the first periodic array 330A) different from second lattice vectors determining the periodicity of the second periodic array 330B. For example, the first lattice vectors may have different lengths or directions than the second lattice vectors. In some cases, the first lattice vectors may be at least 10% smaller (or larger) than the second lattice vectors.

In some implementations, both the characteristic sizes of the nanostructures forming the first and second periodic arrays 330A and 330B may be different as well as the first lattice vectors and the second lattice vectors.

The nanostructures of the periodic arrays 330A and/or 330B may have any suitable shape (e.g., but not limited to, the structures may be hemispherical elements, pyramids, cones, truncated cones, columns (e.g., but not limited to, pillars) with a rectangular cross-section, columns (e.g., but not limited to, pillars) with a circular cross-section, cubical cavities (e.g., holes), conical cavities, columnar cavities, hemispherical cavities, and the like. For instance, the cross-sectional shape of the nanostructures may include a rectangle, a triangle, a circle, a pentagonal, a hexagonal, and the like. In some cases, the nanostructures of the first periodic array 330A may have a first shape (e.g., but not limited to, pillars) while the nanostructures of the second periodic arrays 330B may have a second shape (e.g., columnar cavities). In various examples, the nanostructures of the first periodic array 330A or the second periodic array 330B may be similar to or the same as the nanostructures of the periodic array of the dielectric layer 111.

In various examples, the coating layer 313 is disposed on the nanostructures of the first and the second periodic arrays 330A and 330B. In some implementation, the same coating layer 313 is disposed on both the first periodic array 330A and the second periodic array 330B. In some implementations, a first coating layer may be disposed on the first periodic array 330A and a second coating layer may be disposed on the second periodic array 330B. In some cases, the first coating layer may be formed from a material that is different from the second coating layer. Additionally, or alternatively, the first coating layer may have a thickness that is different from the thickness of the second coating layer (e.g., but not limited to, the first coating layer may be 10% thicker than the second coating layer). In some implementation, the first coating layer may be deposited on the first periodic array 330A while the second periodic array 330B is being masked. Subsequently, the first periodic array 330A and the first coating layer are being masked, while the second coating layer is deposited on the second periodic array 330B. Such an approach may allow deposition of the first and the second coating layers that differ in thickness, or that are formed from different materials. In some cases, when more than two periodic arrays are used (e.g., but not limited to, three periodic arrays are used), the associated coating layers may be deposited for each periodic array while masking the other periodic arrays.

The physical parameters of the periodic arrays 330A and 330B can be selected so that the arrays filter visible light at different wavelength ranges.

The fluorescent layer 315 may be formed from one or more fluorescent compounds dispersed therethrough. The compounds can be homogenously or inhomogeneously dispersed through the layer 315. For example, in some cases, the fluorescent layer 315 in proximity of the first periodic array 330A includes a first set of the fluorescent compounds (e.g., compounds that emit at a first peak wavelength of light, as indicated by rays 323A and 325A) while the fluorescent layer 315 in proximity of the second periodic array 330B may include a second set of the fluorescent compounds (e.g., compounds that emit at a second peak wavelength of light, as indicated by rays 323B and 325B). Alternatively, the fluorescent layer 315 may have the same fluorescent compounds in proximity of the first periodic array 330A and the second periodic array 330B.

The combination of the dielectric layer 311 having the first periodic array 330A and the coating layer 313 forms a first optical filter, while the combination of the dielectric layer 311 having the second periodic array 330B and the coating layer 313 forms a second optical filter. Both the first and the second optical filters transmit ultraviolet light (similar to transmission properties of the optical filter of a structure 100, as described above). However, the first optical filter is configured to block a visible light at a first wavelength range (and transmit light at a first peak wavelength), while the second optical filter is configured to block a visible light at a second wavelength range that is different from the first wavelength range (and transmit light at a second peak wavelength). Accordingly, emission from fluorescent layer 315 is filtered by the first and second optical filters corresponding to array 330A and 330B, respectively, to produce a first color and a second color respectively.

The structure 300 may be used as anti-counterfeiting features or may be used for any other applications that utilize emission of two or more peak wavelengths (e.g., different colors) each at a particular viewing angle (e.g., for displaying an image that can change when viewing at different angles). Further, structure 300 may be used for applications that use emission of a first set of peak wavelengths at a first viewing angle and a second set of peak wavelengths at a second viewing angle. It should be noted that an emission of light at a peak wavelength includes a wavelength distribution (e.g., a Gaussian distribution) about that peak wavelength. The structure 300 may be a part of a display, a part of the device, and the like. In one implementation, the structure 300 is configured to emit a set of peak wavelengths of light in a visible range, in response to being illuminated by an incident light 321A and 321B, as shown in FIG. 3.

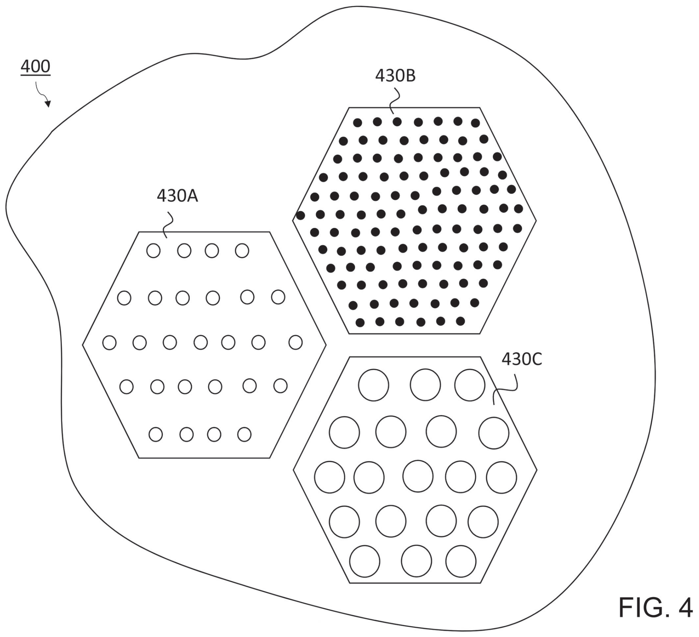

Generally, more than two periodic arrays may be present in the same device. For example, the dielectric layer 311 may include three or more arrays with corresponding nanostructures that are different between each other in size, in periodicity, and/or in shape. An example of a device 400 with three periodic arrays is shown in FIG. 4. Device 400 includes three arrays 430A, 430B, and 430C that are hexagonal in shape. Each array is a two-dimensional array of nanostructures, such as pillars. The size and periodicity of the nanostructures in each array is different.

The three periodic arrays 430A, 430B, and 430C form corresponding first, second, and third optical filters. The first, second, and third optical filters block visible light at a respective first, second, and third wavelength ranges and transmit light at respective first, second, and third peak wavelengths. For example, a first optical filter can transmit red light (e.g., but not limited to, light having a peak wavelength in a range from 595 nm to 635 nm), a second optical filter can be configured to transmit green light (e.g., but not limited to, light having a peak wavelength in a range from 520 nm to 560 nm), and a third optical filter can transmit blue light (e.g., but not limited to, light having a peak wavelength in a range from 420 nm to 460 nm). Thus, using the first, second, and third filters, the red, green, and blue colors may be combined to form a variety of colors.

It should be noted, that for combining red, green, and blue colors effectively, intensity of these colors may be configured to be about the same, photopically weighted, or at some other specified ratio, therefore, the first, second, and the third optical filters in combination with the fluorescent layer 315 are configured to generate red, green, and blue color of about the same intensity. For example, the relative size of the arrays can be varied to provide different colors at desired relative intensities.

Further, it should also be noted that structure 300 may be configured to emit any suitable peak wavelengths in the visible range. For instance, the structure 300 may emit yellow, magenta, cyan, violet, orange, and the like.

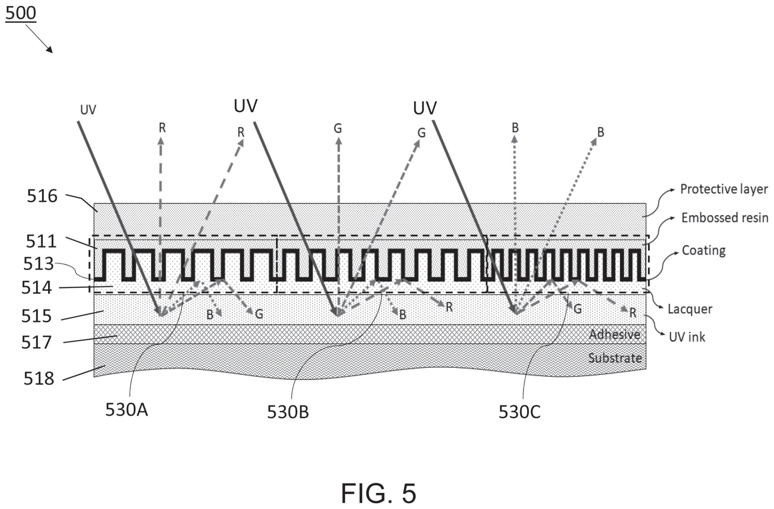

In various examples, additional layers may be presented to further improve the performance of a structure that is configured to emit light at a various peak wavelengths when irradiated by an incident light. An example of a structure 500 that includes additional layers is shown in FIG. 5. In this example, the additional layers include a second dielectric layer 514 disposed between a fluorescent layer 515 and a coating layer 513. The fluorescent layer 515 is attached to a substrate 518 by an adhesive layer 517.Further, a protective layer 516 is applied to the opposite side of the stack, on planar surface of dielectric layer 511. The layers 511-518 of the structure 500 may be similar to or the same as, in form or in function, respective layers 211-218 of structure 200. Further, the dielectric layer 511 is pattered with three periodic arrays 530A-530C, having different pitches as shown in FIG. 5. When UV light irradiates the fluorescent layer 515 the fluorescent layer 515 emits light at various wavelengths (e.g., but not limited to, visible light wavelengths, such as at red, green, blue, or other colors).

The first periodic array 530A of the dielectric layer 511 in combination with the coating layer 513 transmits red light while preventing transmission of green and blue light as shown in FIG. 5. The second periodic array 530B and the coating layer 513 transmits green light preventing transmission of the red and blue light. Further, the third periodic array 530C and the coating layer 513 transmit blue light while preventing transmission of red and green light

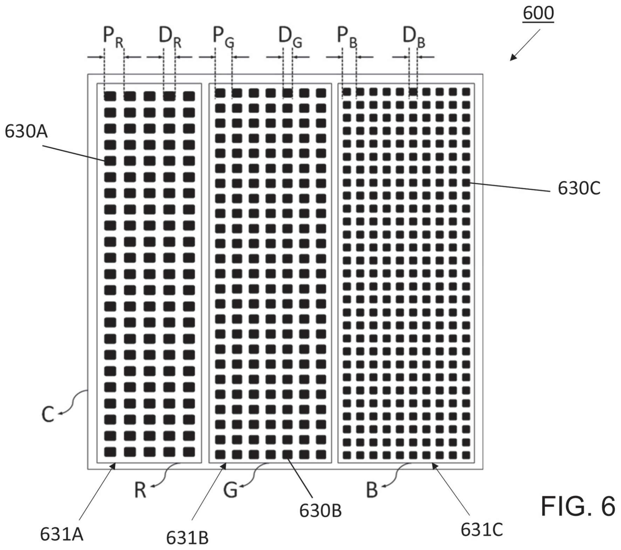

An example of a metasurface-based true-color pixel 600 is shown in FIG. 6. Pixel 600 includes three subpixels: a red subpixel 631A, a green subpixel 631B, and a blue subpixel 631C. Each subpixel has a rectangular shape and includes a periodic two-dimensional array of nanostructures, each corresponding to a metasurface optical filter as described previously. The red subpixel 631A includes nanostructures having a periodicity PR and a dimension DR. Similarly, the green subpixel 630B includes nanostructures having a periodicity Po and dimension Do. The blue subpixel 630C includes nanostructures with periodicity PB and dimension DB. PR> Po> PB and DR> Do> DB. The transmission and absorption spectra of each subpixel depends on plasmonic or dielectric resonances which are determined by the periodicity of the embedded lattice and the dimensions of the nanostructures. Also, the area of subpixel 630A is smaller than the area of subpixel 630B which, in tum, is smaller than the area of subpixel 630C. The dimensions of the color pixel may be about 32 µm (slightly below the eye resolution) to as small as about 2 µm (suitable upper limit to avoid displaying a pixelated image).

The relative areas of the subpixels may be weighted so that the pixel displays a specific color combining different proportions of red, green, and blue light to the observer.
In some examples, the embedded metasurface filters 630A-630C may be replaced with perforated sheets to provide the desired pixel color. The color pixel may embed only one sub-pixel, or a combination of two or more subpixels to produce desired color values. These subpixels may match any standard color basis, and the associated metasurface filter may be chosen from any set of transmission filters which produce the desired combined hue when placed over the underlying dielectric layer (e.g., but not limited to, a fluorescent layer).

In general, the color of pixel 600 is calculated using a formula *C* = *a₁A₁ + {3₁B₁ +* YiG₁. Here, C is a color value, A1 is the color of a first sub-pixel (e.g., subpixel 631A), a1 is the weight factor associated with A1, B1 is the color of a second sub-pixel (e.g., subpixel 631B), 1 is the weight factor associated with B1, G1 is the color of a third sub-pixel (e.g., subpixel 631C), and y1 is the weight factor associated with G1. For each sub-pixel, the weight factor is calculated by dividing the area occupied by the sub-pixel by the total area of the pixel containing the sub-pixel. Each weight factor is a value from Oto 1.

In some examples, an optical filter may be determined (assigned) for a particular color (e.g., but not limited to, the first optical filter may be determined to obtain a red color, a second optical filter is determined to obtain a green color and a third optical filter is determined to obtain a blue color). After the optical filters are determined, the weight factors (e.g., but not limited to, portions) of the colors are determined in order for the colors weighted by the weight factors to add up to a particular color (e.g., but not limited to, magenta, white, and the like). The determined weight factors may be the same as weight factors *av f3v* and Yi as described above. After determining the weight factors, the areas of sub-pixels 631A-631C may be adjusted such that the ratio of the area of the sub-pixel 631A to the total area of all the sub-pixels is equal to weight factor *av* that the ratio of the area of sub-pixel 631B to the total area of all the sub-pixels is equal to weight factor *f3v* and that the ratio of the area of sub-pixel 631C to the total area of all the sub-pixels is equal to weight factor Yi.

In some implementations, a pixel can be color invariant under UV light (i.e., when irradiated by an UV light). For example, when the pixel is viewed from different angles the color of the pixel remains the same (e.g., but not limited to, the pixel may appear yellow when viewed from different angles). Alternatively, a pixel may be color variant under UV light. For such cases, when the pixel is viewed from different angles, the color of the pixel changes (e.g., but not limited to, the pixel may appear yellow when viewed from a 45-degree angle as measured from a normal direction to the surface of the pixel, but may appear orange when viewed from a 30-degree angle). In some implementations, when the pixel is color variant, the color variance comprises a first color viewable within± IO degrees around the normal direction and a second color viewable, for example, about 50 to about 70 degrees away from the normal direction.

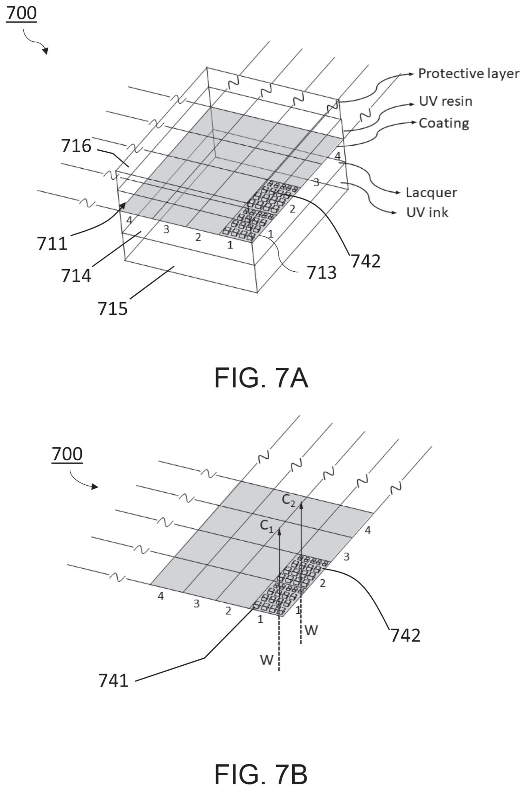

A display can be composed of an array of many pixels used to represent an image. An example of a display 700 is shown in FIG. 7A and FIG. 7B. Display 700 is composed of a two-dimensional array of pixels, a portion of which are shown here as a 4 x 4 array (the array coordinates here indicate a row and column for the pixel). For example, a pixel 742 may be referred to as pixel Pl2, as it is in the first column and the second row. The display 700 is composed of a stack of layers includes a dielectric layer 711 of a UV resin embossed with nanostructures as described previously. The nanostructures are coated with a coating layer 713. A protective layer 716, a second dielectric layer 714 and a fluorescent layer 715, which may be similar to (or the same as) respective layers of other structures are also shown in FIG. 7A Further, while not shown, the structure 700 may have an adhesive layer and a substrate.

Operation of display 700 is shown illustratively in FIG. 7B. A true-color image is reconstructed using two pixels 741 and 742. Each pixel of the true-color image embeds weighted regions, each incorporating a color filter from the available subset of metasurface filters. Different weighting factors of different metasurface filters, each providing a unique hue, saturation, and luminescence in combination with the fluorescence light, enable displaying a true-color image under UV light. The underlaid fluorescent layer 715 emits white light (W) fluorescence shown in FIG. 7B. Based on the optical filter arrangement in each of the respective pixels, pixel 741 and 742 emit respective colors C1 and C2 as shown in FIG. 7B due to the optical filters blocking certain wavelengths of the fluorescent emission.

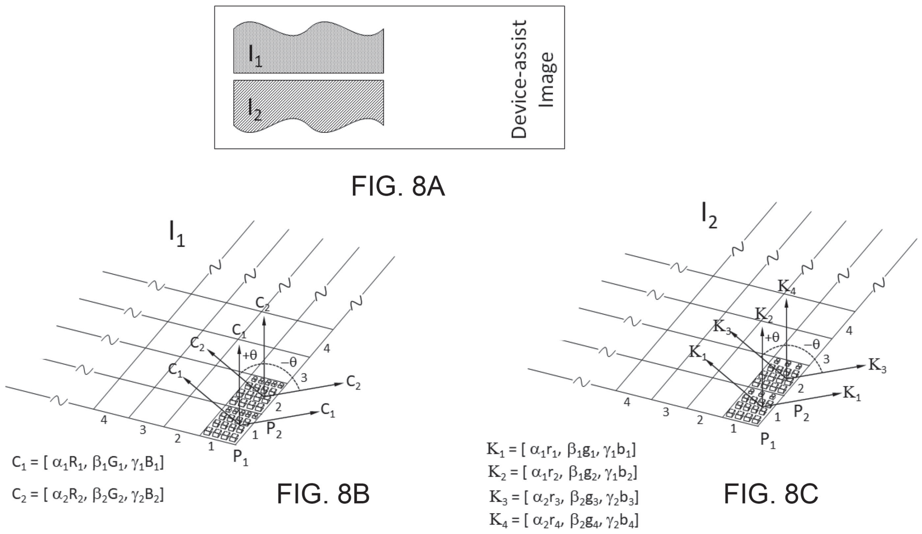

A device-assisted security feature embedding two constituent true-color metasurface based images I1 and Ii, is shown in FIGS. 8A-8C. The image I1 is composed of color pixels Pi, where each color pixel Pi embeds at least one sub-pixel made of a metasurface optical filter as shown in FIG. 8B. The example color pixel P1 (P2) displaying color value of C1 (C2) is made of red R1 (R2), green G1 (G2), and blue B1 (B2) sub-pixels, containing metasurface filters. The pixel R1 (R2) includes weight factor a1 (a2), G1 (G2) includes weight factor of 1 ( 2), and B1 (B2) includes weight factor ofy₁ (y₂), respectively. The transmission spectra of metasurface filters R1, G1, and B1 are angularly stable (e.g., but not limited to, at various angles the color transmitted by these filters is substantially the same), thus C1 the color of color pixel P1 remains angularly invariant at least over a range of viewing angles. Similarly, in this example, all other embedded metasurface filters and the associated color pixels P2 to PN (where N is the total number of pixels in image I1) are angularly invariant, therefore, the true-color image I1 remains color stable independent of the viewing angle. A true-color device-assisted image offering color-invariant display under UV light is a strong authentication feature for security applications.

The image Ii is composed of color pixels Pi, where each color pixel Pi embeds at least one sub-pixel made of a metasurface optical filter as shown in FIG. 8C. The color pixel P1 is made of r1, g1, and b1 sub-pixels, which contain metasurface filters r1, g1, and b1 weighted by a1, 1, y₁, respectively, and displaying color value of K1 at tilted angles (for example> 30°). In proximity to the normal angle(< ±15°), the metasurface filters color shift to r2, g2, and b2, while and the weight factors al,**1** ,y₁, determined by the physical area occupied by each sub-pixel,
remain the same, displaying a color value of K2. Similarly, in this example, all other embedded metasurface filters and the associated color pixels P2 to PN (where N is the total number of pixels in image Ii) color shift for different angles, therefore, the true-color image Ii color shifts depending on the viewing angle. A true-color device-assisted image offering color-variant display under UV light is a strong authentication feature for security applications.

An alternative example is the combination of examples I1 and Ii at the pixel level, were parts of the image color shift depending on the viewing angle and the rest of the image remains color invariant within a reasonably wide view zone.

In general, displays composed of the structures disclosed herein can include color-shifting pixels, color-stable pixels, and black pixels, in various combinations. Color-shifting and color-stable pixels utilize transmissive metasurface optical filters as described above, in which the optical filter transmits certain visible wavelengths while transmitting others. Black pixels, on the other hand, use absorptive metasurface optical filters that do not substantially transmit any visible wavelengths. In such filters, the localized plasmonic resonances have a high dispersion loss and absorb the visible light. Such pixels can be considered color-stable because they do not color shift with respect to the viewing angle and are omnidirectionally 'dark' regardless of the viewing angle. Such pixels can be useful to reconstruct an image where dark pixels are desired.

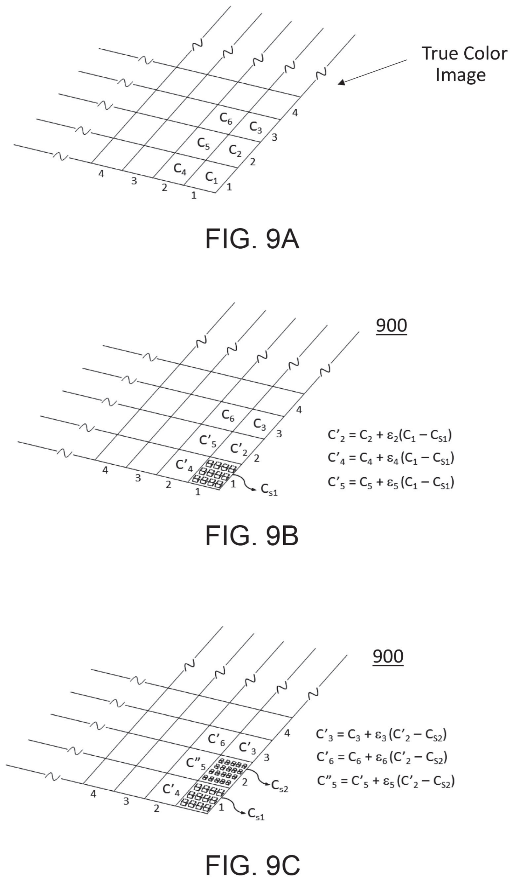

An example method of populating color pixels with metasurface filters to reconstruct a true-color image is illustrated in FIGS. 9A-9C. The example method is a dithering method where each color pixel embeds only one sub-pixel made of metasurface filters. Using the dithering approach, each pixel may approximately represent the color of the equivalent true-color image, however, a combination of the pixels represented by metasurface filters provide a good representation of the true-color image. Dithering is the process of trading off one type of resolution for another. In the case of dithering representing true-color images, the trade-off involves giving up spatial resolution to gain color resolution and is generally useful when working with a limited color palette. While any dithering process may theoretically work for producing an approximation of a true-color image, the broad category of error diffusion is the type of dithering best-suited for the disclosed filter-based technology.

An error diffusion starts with a true-color image made up of an array of colors C1-C6, and so on collectively represented by C, as show in FIG. 9A. For a first pixel Pl 1, (the pixel is referred by its row and column coordinates as described above), the metasurface filter is selected that displays the closest color Cs1 to the desired color C1. Subsequently, the pixel containing the metasurface filter and displaying color Cs1 is placed at the location of the pixel Pl I (e.g., but not limited to, the location of Pl I is the first row and the first column of a structure 900, as shown in FIG. 9B). The error in the color displaying by the first pixel Pl I is calculated as (C₁ - C_{S1}). While the neighboring pixels P21, P22, and Pl2, surrounding the first pixel Pl I may be useful to display the respective colors C4, *Cs,* and C2, the color error (C₁ - Cs₁) may be added first (with a suitable weight) to these colors C4, *Cs,* and C2, prior to selecting suitable metasurface optical filters for the pixels P21, P22, and Pl2, representing colors. For example, after adding the error, the colors are modified as *C* = C₂ + E₂(C₁₋ C₅₁), *Cl* = C₄ + E₄(C₁₋ C₅₁), and *C* = Cs + Es(C₁ - C₅₁). These updated desired colors C2', C/ and *Cs'* are then become new desired colors and are used to select a metasurface optical filter for the corresponding pixels.

For the dithering method, the weights are determined by distance on the sample from the pixel that is used for error calculations. Specifically, the distance from the center of that pixel to the center of the new pixel is used for determining the weight. In an example, pixels further away from the pixel that is used for error calculations get a lower weight than ones closer. The weights are configured to add up to 1. Spreading the weights out over a larger region increases the color accuracy but smooths out the image. Alternatively, localizing the weights in the proximity of the pixel that is used for error calculations reduces color accuracy but increases the sharpness of the image.

In some implementations, at a next step of the process, the metasurface optical filter for pixels P21, P22, and Pl2 is then chosen that best fit colors C2', C4' and *Cs'.* The process is repeated further, by calculating resulting color errors for pixels P21, P22, and Pl2, and propagating these errors to modify colors of respective neighboring pixels. In some implementations, only the metasurface filter for one of the neighboring pixels (e.g., Pl2) is selected that best fits the color C2'. The selected metasurface filter results in color Cs2 that may replicate the color C2' but results in a color error C2'-Cs2. This color error is further added to the colors of the neighboring pixels P22, P23, and Pl3, while not affecting the previously corrected color C/. In an example, new colors C ' =Cs'+ Es(Cz' - C₅₂₎, *C* = *C₆ + _{E6}(Cz' -* C₅₂), and *C* = *C*₃ + _{*E*3(} *C*_{*2'*-} *C*₅₂₎ are determined by adding error C2'-Cs2 to the previously determined colors. Note that color *Cs"* is modified to contain error C1-Cs1 and C2'-Cs2, since color C ' may be written as _{*C*'} =Cs+ Es(C₁ - C₅₁) + Es(C₂ - C₅₂ + E₂(C₁ - C₅₁₎₎. The above process is repeated for all the neighboring pixels further updating the desired colors. No error is diffused backwards as this would have no effect since the metastructure filters have already been selected for processed pixels. To dither the entire image, the process of determining new colors based on errors between colors produced by metastructure filters and colors of a true-color image is continued until metasurface filters are selected for every pixel Pij of structure 900.

In some examples, a method 1000, similar to the method described above, is used for determining a structure that is similar to structure 900. The method 1000 includes, at step 1012, placing a first metastructure filter (herein also referred to as a device) configured to emit a color closest to the first true-color C1 at a first pixel location (e.g., but not limited to, at a location of the pixel Pl 1). At step 1014, the method includes calculating a wavelength difference between the first color and the color emitted by the first metastructure filter. At step 1016, the method includes adding the wavelength difference to a second color of a second pixel that is adjacent to the first pixel, and at step 1018, at the second pixel, the method includes placing a second metastructure filter that is configured to emit a color closet to the second color with the difference added. In various implementations of the method 1000, steps 1012-1018 are repeated until each pixel in the array of pixels has a metastructure filter placed therein.

The surface profile of the functionalizing layer may have a noticeable impact on the dispersion properties of the metasurface-based filter. Metallic coatings, in particular, support localized plasmonic resonances where the shape and dimensions of the coating may change the color spectrum and colorshift characteristics of the metasurface-based filter. Normally, the directionality of the deposition process plays a key role. For example, sputtering deposition leads to a conformal coverage of the nanoimprinted metasurface resin structures, whereas the directionality of the thermal evaporation process may result in metallic film discontinuities as shown in Figures I & 2. These discontinuities may host localized plasmonic resonances, which may strengthen or compete with the propagating plasmonic resonances in the plasmonic lattice, resulting in spectral shift or bandwidth engineering. From the manufacturing point of view, while sputtering produces better film quality and uniformity, it is also slower and more complex compared to the thermal evaporation. When doing high volume production, a high deposition throughput is required where the thermal evaporation offers higher deposition rates

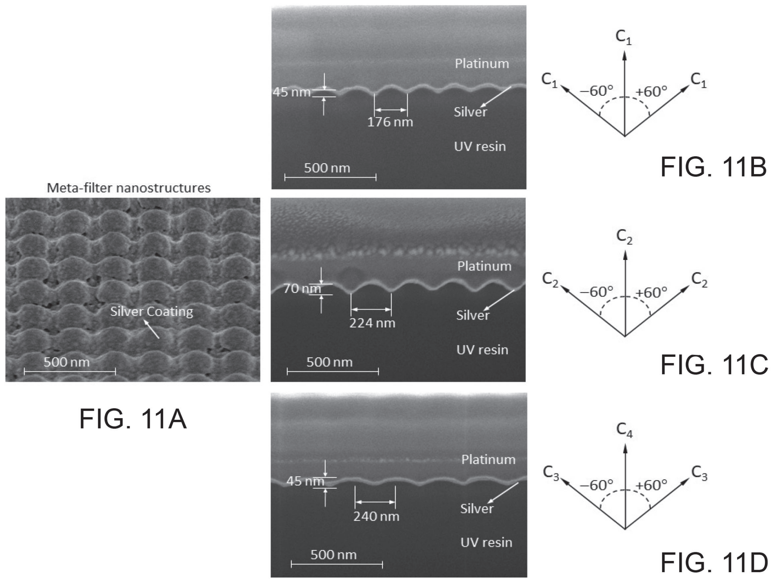

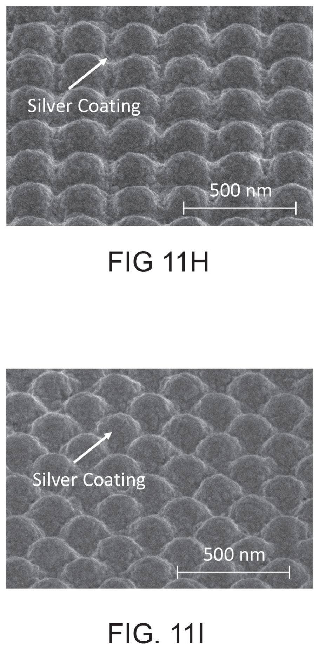

Scanning electron microscopy (SEM) images of example metasurface filters are shown in FIGS. 1IA-1ID. The tilted top view of metasurface nanostructures coated with a thin layer (30 nm) of sputtered silver is shown in FIG. I IA The cross-section of three metasurface filters is shown in FIGS. 1IB-1ID. The material stack is composed of a nano-patterned first dielectric layer (e.g., but not limited to, a UV curable resin) and a thin layer of functionalizing silver. The platinum layer is a sacrificial layer only deposited onto silver during the microscopy measurement to protect the cross-section against bombarded ions which cut the sample for imaging. From top to bottom, the first two pixels shown in FIGS. 11B and 11C do not color shift (as indicated by colors C1 and C2 for different angles), whereas the third metasurface filter shown in FIG. 11D undergoes a red to green color shift (as indicated by colors C3 and C4 for different angles) when combined with fluorescing layer (e.g., but not limited to, a UV ink) made of red and green pigments. The lateral size of each element ranges between about 160 and about 300 nm, while the vertical size ranges between about 45 nm and about 75 nm as shown in FIGS. 11A-11D.

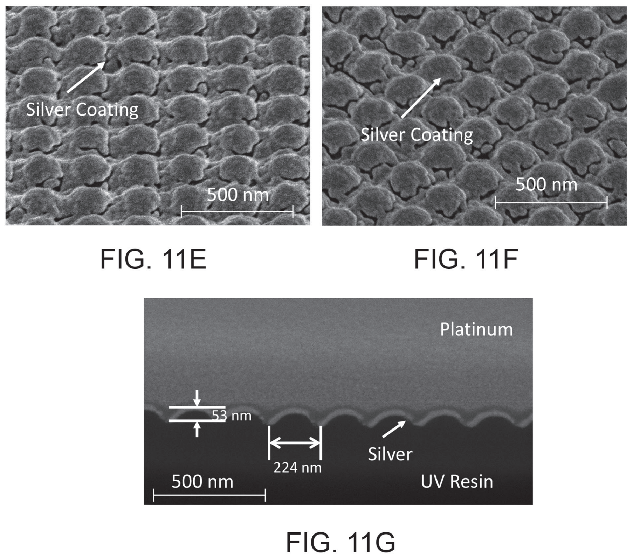

The tilted x-y top view and diagonal top view of metasurface nanostructures coated with a thin layer (30 nm) of thermal evaporated and sputtered silver is shown in FIGS. 11E and 11F. The cross-section of metasurface filters with thermal evaporated silver is shown in FIG. 11G. The metasurface nanostructure with sputtering demonstrates a continuous metallic thin film coating which the same nanostructure with thermal evaporation shows discontinuities between hills and valleys as shown in FIGS. 11H and 111. Due to the different metallic thin film coating profiles, the metasurface filter functionalized with sputtering silver thin film does not color shift under a wide range of viewing angles, whereas the same lattice of nanostructures with thermal evaporated metallic thin film color shifts, showing a red to green shift when inspected at different viewing angles.

A photograph of an image formed by a metasurface-based color-shifting device-assist security foil applied onto banknote paper is shown at two different viewing angles in FIG. 12A and FIG. 12B respectively. The photograph was taken under UV illumination at viewing angles of 0 degrees and 60 degrees in FIG. 12A and FIG. 12B, respectively. The foil structure resembles the structures 100, 300, and 500 described herein, with the exception that only red and green pigments are used as the fluorescing components for the fluorescent layer. The feature is an image representation of a true-color display of a race car that color-shifts depending on the viewing angle. Color-stable absorptive metasurface-based filters (labeled by Black) are utilized to define details in the image and add contrast under UV illumination. The structure used for forming the image can be produced in a roll-to-roll manufacturing platform.

### EQUIVALENTS

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the scope of the appended claims. Accordingly, the specification and drawings are to be regarded in an illustrative sense rather than a restrictive sense. Although various features of the approach of the present disclosure have been presented separately (e.g., in separate figures), the skilled person will understand that, unless they are presented as mutually exclusive, they may each be combined with any other feature or combination of features of the present disclosure.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented in multiple examples separately or in any sub-combination.

Those skilled in the art will recognize, or be able to ascertain, using no more than routine experimentation, numerous equivalents to the specific examples described specifically herein. Such equivalents are intended to be encompassed in the scope of the following claims.

Also disclosed is a device configured to emit a color in a visible range, the device comprising: (i) a first dielectric layer having a periodic array of nanostructures on a first side; (ii) a coating layer disposed on the periodic array, the coating layer comprising a metallic or dielectric material, wherein the combination of the coating layer and the periodic array forms an optical filter configured to transmit ultraviolet (UV) light and block visible light at a wavelength range; and (iii) a fluorescent layer disposed on or in proximity to the coating layer, the fluorescent layer comprising a plurality of fluorescent compounds dispersed therethrough, the fluorescent compounds being configured to emit visible light when illuminated by the UV light, which is filtered by the optical filter to produce the color. The device may further comprise a second dielectric layer disposed between the coating layer and the fluorescent layer.

The device may further comprise an adhesive layer disposed on the fluorescent layer. A substrate may be disposed on the adhesive layer.

The device may further comprise a protective layer disposed on a second side of the first dielectric layer, the second side being opposite to the first side, wherein the protective layer absorbs minimal visible light and is configured to protect the device from mechanical and chemical damage.

The periodic array may have a periodicity of about 120 nm to about 700 nm; and/or up to 400 columns and up to 400 rows.

Each nanostructure may have a height in the range of 50 nm to 300 nm, and a lateral dimension in the range of 90 nm to 300 nm. Each nanostructure may have a cross-sectional shape of a rectangle, a triangle, a circle, a cross, or a hexagon. Each nanostructure may be a pillar or a hole.

The protective layer may: have a thickness in the range of of about 2 µm to about 4 µm; the first dielectric layer may have a thickness of no more than 10 µm;
the coating layer may have a thickness of no more than 100 nm if the coating layer comprises a metallic material or in the range of about 50 nm to 200 nm if the coating layer comprises a dielectric material; the second dielectric layer may have a thickness in the range of about 1 µm to about 5 µm;
the fluorescent layer may have a thickness in the range of about 4 µm to about 10 µm;
the adhesive layer may have a thickness in the range of about 8 µm to about 25 µm; and/or the substrate layer may have a thickness in the range of about 75 µm to about 100 µm.

The protective layer may comprise: a polymer that has a refractive index matching that of the first dielectric layer, wherein optionally the polymer is lacquer or varnish;
the first dielectric layer may comprise a photopolymer resin or a thermoplastic resin;
the coating layer may comprise: (a) a metallic material selected from aluminum, silver, gold, nickel, chromium, and a combination thereof; or (b) a dielectric material selected from silicon, TiO2, ZrO2, Si3N4, Nb2O5, and a combination thereof;
the second dielectric layer may comprise acrylic lacquer, thermoplastic lacquer, or UV curable lacquer; the fluorescent layer may comprise a binding agent or a UV curable resin;
the adhesive layer may comprise a water-based pressure sensitive adhesive, latent reactive adhesive, or a thermoplastic adhesive; and/or
the substrate may comprise paper or a polymer, wherein optionally the substrate is a paper or a polymer banknote.

The dielectric material of the coating layer may have a refractive index of at least 2.4.

The color emitted by the device may be detectable from the protective layer, wherein optionally the color is angle variant or invariant.

The color emitted by the device may have a peak wavelength of about 420-460 nm, about 520-560 nm, or about 595-635 nm.

The second dielectric layer may be configured to reduce transferring of roughness of the adhesive layer, the fluorescent layer, or the substrate to the first dielectric layer and the coating layer.

The device may be configured to be used as an anti-counterfeiting feature.

Also disclosed is a device configured to emit two or more colors in a visible range of wavelengths, the device comprising: (i) a first dielectric layer having a first periodic array of nanostructures and a second periodic array of nanostructures on a first side; (ii) a coating layer disposed on the first and second periodic arrays, the coating layer comprising a metallic or dielectric material, the combination of the coating layer and the first periodic array forming a first optical filter configured to transmit ultraviolet (UV) light and block visible light at a first wavelength range, the combination of the coating layer and the second periodic array forming a second optical filter configured to transmit UV light and block visible light at a second wavelength range that is different from the first wavelength range; and (iii) a fluorescent layer disposed on or in proximity to the coating layer, the fluorescent layer comprising a plurality of fluorescent compounds dispersed therethrough, the fluorescent compounds being configured to emit visible light when illuminated by the UV light, such that emitted visible light is filtered by the first and second optical filters to produce a first color and a second color, respectively.

The first periodic array may be adjacent to the second periodic array.

The first dielectric layer may further comprise a third periodic array of nanostructures on the first side; the third periodic array is adjacent to the first or second periodic array; and the combination of the coating layer and the third periodic array forms a third optical filter configured to transmit UV light and block visible light at a third wavelength range that is different from the first and second wavelength ranges, such that the visible light emitted by the fluorescent compounds is filtered by the third optical filter to produce a third color. The two or more colors may be selected from red, green, blue, and a combination thereof. The device may be configured to be used as an anti-counterfeiting feature.

The coating layer may be disposed on the first periodic array is a first coating layer; the coating layer disposed on the second periodic array is a second coating layer; and the first coating layer has a different material and/or thickness from the second coating layer.

Also disclosed is a method of making the device, comprising: (i) assigning an optical filter to each of the two or more colors; (ii) determining a proportion of each of the two or more colors used to add up to a white color; and (iii) scaling an area of each optical filter based on the proportion.

Also disclosed is a method emitting two or more colors in a visible range of wavelengths, the method comprising: providing a device, the device comprising: a first dielectric layer comprising: a first periodic array of nanostructures on a first side of the dielectric layer; and a second periodic array of nanostructures on the first side first side of the dielectric layer, the device further comprising: a coating layer disposed on the first and second periodic arrays, the coating layer comprising a metallic or dielectric material, the combination of the coating layer and the first periodic array forming a first optical filter configured to transmit ultraviolet (UV) light and block visible light at a first wavelength range, and the combination of the coating layer and the second periodic array forming a second optical filter configured to transmit UV light and block visible light at a second wavelength range that is different from the first wavelength range; and a fluorescent layer disposed on or in proximity to the coating layer, the fluorescent layer comprising a plurality of fluorescent compounds dispersed therethrough, the method further comprising: illuminating the fluorescent layer with UV light; emitting visible light from the layer in response to the illuminating with UV light; and filtering the emitted visible light with the first and second optical filters to produce a first color and a second color, respectively.

Also disclosed is a visual display useful as an anti-counterfeiting feature, comprising: (i) a first pixel comprising a first set of two or more sub-pixel, each sub-pixel corresponding to a device of paragraph [00164] and being characterized by a color and an associated weight factor, wherein the colors and the associated weight factors of the first set of at least one sub-pixel determine a color value of the first pixel; and (ii) a second pixel comprising a second set of at least one sub-pixel, each sub-pixel corresponding to a device of paragraph [00164] and being characterized by a color and an associated weight factor, the colors and the associated weight factors of the second set of at least one sub-pixel determining a color value of the second pixel. The color value of a given one of the first or second pixel may be determined by the formula C = αA + βB + yG, wherein: C is the color value; A is the color of a first sub-pixel of the given pixel; α is the weight factor associated with A; B is the color of a second sub-pixel of the given pixel; β is the weight factor associated with B; G is the color of a third sub-pixel of the given pixel; y is the weight factor associated with G; and each of α, β, and y has a value between 0 and 1. The first and/or second pixels may be color invariant under UV light. The first and/or second pixels may be color variant under UV light. The color variance may comprise a first color viewable within ±10 degrees around surface normal and a second color viewable 50 to 70 degrees away from the surface normal.

The second pixel may be adjacent to the first pixel.

The visual display may further comprise at least one pixel comprising at least one dark pixel. The at least one dark pixel may comprise an optical filter configured to block visible light at all wavelengths under UV light.

Also disclosed is a method of providing an article with an anti-counterfeiting feature, the method comprising applying the visual display to the article.

Also disclosed is a method of constructing an image using a plurality of the devices according to any one of paragraphs [00164] to [00175], the image having an array of pixels, wherein the method comprises: at a first pixel having a first color, placing a first device according to any one of paragraphs [00164] to [00175]; calculating a wavelength difference between the first color and the color emitted by the first device; adding the wavelength difference to a second color of a second pixel that is adjacent to the first pixel; and at the second pixel, placing a second device according to any one of paragraphs [00164] to [00175] that is configured to emit a color closet to the second color with the wavelength difference added. The method may further comprise repeating the calculating, adding and placing until each pixel in the array has a device placed therein.

Also disclosed is a device to enhance a contrast of a security feature, the device comprising: a first dielectric layer having a first periodic array of nanostructures and a second periodic array of nanostructures; a coating layer disposed on the periodic arrays, the coating layer comprising a metallic or dielectric material, a combination of the coating layer and the first periodic array forming a first optical filter configured to transmit ultraviolet (UV) light and block visible light at a first wavelength range, and a combination of the coating layer and the second periodic array forming a second optical filter configured to transmit UV light and block visible light at a second wavelength range that is different from the first wavelength range, a third visible wavelength range different from the first and second wavelength ranges being unaltered by the first or second optical filters.

## Claims

1. A device configured to emit a color in a visible range, the device comprising:
a first dielectric layer (111) having a periodic array of nanostructures (112) on a first side;
a coating layer (113) disposed on the periodic array, **characterized in that**: the coating layer comprising a metallic or dielectric material, wherein the combination of the coating layer and the periodic array forms an optical filter configured to transmit ultraviolet (UV) light and block visible light at a wavelength range; and
a fluorescent layer (115) disposed on or in proximity to the coating layer, the fluorescent layer being configured to emit visible light when illuminated by the UV light, which is filtered by the optical filter to produce the color.

2. The device of claim 1, wherein the periodic array has a periodicity of about 120 nm to about 700 nm; and/or wherein the periodic array has up to 400 columns and up to 400 rows; and/or wherein each nanostructure has a height in the range of 50 nm to 300 nm, and a lateral dimension in the range of 90 nm to 300 nm; and/or wherein each nanostructure has a cross-sectional shape of a rectangle, a triangle, a circle, a cross, or a hexagon; and/or wherein each nanostructure is a pillar or a hole.

3. The device of any one of the preceding claims, wherein the fluorescent layer comprises one or more fluorescent compounds dispersed therethrough, the one or more fluorescent compounds being configured to emit the visible light when illuminated by the UV light.

4. The device of claim 3, wherein:
the first dielectric layer comprises a photopolymer resin or a thermoplastic resin;
the coating layer comprises: (a) a metallic material selected from aluminum, silver, gold, nickel, chromium, and a combination thereof; or (b) a dielectric material selected from silicon, TiO2, ZrO2, Si3N4, Nb2O5, and a combination thereof;
only some surfaces of the nanostructures of the periodic array are coated, while other surfaces are uncoated;
the one or more fluorescent compounds only comprise red and green pigments;
the one or more fluorescent compounds comprise a plurality of fluorescent compounds; and/or
the fluorescent layer comprises a binding agent or a UV curable resin.

5. The device of any one of the preceding claims, wherein the dielectric material of the coating layer has a refractive index of at least 2.4; and/or wherein the color emitted by the device has a peak wavelength of about 420-460 nm, about 520-560 nm, or about 595-635 nm.

6. The device of any one of the preceding claims, wherein the periodic array of nanostructures 112 has a periodicity greater than about 350 nm and is configured to diffract, or the periodicity is between about 120 nm and about 300 nm with muted diffraction under illumination of visible wavelength and/or UV lighting conditions.

7. The device of any one of the preceding claims, further comprising a second dielectric layer (214) disposed between the coating layer (113) and the fluorescent layer (115), wherein the second dielectric layer is configured to reduce transferring of roughness of an adhesive layer, the fluorescent layer, or a substrate to the first dielectric layer and the coating layer.

8. The device of any one of claims 3-7, wherein the first dielectric layer (111) further comprises a second periodic array of nanostructures on the first side, and wherein combination of the coating layer and the second periodic array forms a second optical filter configured to transmit UV light and block visible light at a second wavelength range that is different from the first wavelength range.

9. The device of claim 8, wherein the fluorescent layer has the same one or more fluorescent compounds in proximity to the first periodic array and the second periodic array.

10. A visual display useful as an anti-counterfeiting feature, comprising:
a first pixel comprising a first set of two or more sub-pixel, each sub-pixel corresponding to a device of any one of the preceding claims and being **characterized by** a color and an associated weight factor, wherein the colors and the associated weight factors of the first set of at least one sub-pixel determine a color value of the first pixel; and
a second pixel comprising a second set of at least one sub-pixel, each sub-pixel corresponding to a device of any one of the preceding claims and being **characterized by** a color and an associated weight factor, the colors and the associated weight factors of the second set of at least one sub-pixel determining a color value of the second pixel.

11. The visual display of claim 10, wherein the first and/or second pixels are color variant under UV light, optionally wherein the color variance comprises a first color viewable within ±10 degrees around surface normal and a second color viewable 50 to 70 degrees away from the surface normal; and/or wherein the first and/or second pixels are color invariant under UV light.

12. The visual display of any one of claims 10-11, wherein the fluorescent layer is configured to emit white light fluorescence, and based on the optical filter arrangement in each of the respective pixels, the first pixel and the second pixel emit colors C1 and C2 due to the optical filters blocking certain wavelengths of the fluorescent emission.

13. A device configured to emit two or more colors in a visible range of wavelengths, the device comprising:
a first dielectric layer (111) having a first periodic array of nanostructures (112) and a second periodic array of nanostructures on a first side;
a coating layer (113) disposed on the first and second periodic arrays, **characterized in that**: the coating layer comprising a metallic or dielectric material, the combination of the coating layer and the first periodic array forming a first optical filter configured to transmit ultraviolet (UV) light and block visible light at a first wavelength range, the combination of the coating layer and the second periodic array forming a second optical filter configured to transmit UV light and block visible light at a second wavelength range that is different from the first wavelength range; and
a fluorescent layer (115) disposed on or in proximity to the coating layer, the fluorescent layer comprising one or more fluorescent compounds dispersed therethrough, the one or more fluorescent compounds being configured to emit visible light when illuminated by the UV light, such that emitted visible light is filtered by the first and second optical filters to produce a first color and a second color, respectively.

14. The device of claim 13, wherein the fluorescent layer in proximity of the first periodic array comprises a first set of the fluorescent compounds configured to emit at a first peak wavelength of light, while the fluorescent layer in proximity of the second periodic array comprises a second set of the fluorescent compounds configured to emit at a second peak wavelength of light.

15. The device any one of claims 13-14, wherein:
the coating layer disposed on the first periodic array is a first coating layer;
the coating layer disposed on the second periodic array is a second coating layer; and
the first coating layer has a different material and/or thickness from the second coating layer.
